# EUROPEAN PATENT SPECIFICATION

(11) **EP 2 860 296 B1**
(45) Date of publication and mention of the grant of the patent: **07.08.2019**
(21) Application number: 13804269.2
(22) Date of filing: 11.06.2013
(51) Int. Cl.: D06F 33/02, G06F 13/00, H04L 12/28

(54) **WASHING MACHINE SYSTEM**
WASCHMASCHINENSYSTEM
SYSTÈME DE MACHINE À LAVER

(30) Priority: 12.06.2012 JP 2012132458
(43) Date of publication of application: 15.04.2015
(73) Proprietor: Panasonic Intellectual Property Management Co., Ltd., Osaka-shi, Osaka 540-6207 (JP)
(72) Inventor: YAGI, Tomotaka, Osaka 540-6207 (JP); KONDOU, Shinji, Osaka 540-6207 (JP); HAGIWARA, Hisashi, Osaka 540-6207 (JP)
(74) Representative: SSM Sandmair
(86) International application number: PCT/JP2013/003642
(87) International publication number: WO 2013/187044

(56) References cited:
- JP-A- H11 295 452
- JP-A- 2003 047 796
- JP-A- 2005 265 759

## Description

### TECHNICAL FIELD

The present invention relates to a washing machine system for setting operation of a washing machine with an external device through a communications network. In particular, the invention relates to the washing machine system that is capable of setting washing operation by specifying a finish time of the operation for a washing machine not equipped with a clock function.

### BACKGROUND ART

It has become popular in recent years that washing machines are provided with preprogramming functions to perform washing operation. Such a preprogramming function enables the user to use low-cost nighttime power, or to have the washing carried out while being away from home so that the washing is completed when the user returns to the home. The preprogramming function for washing operation is used normally in such a way that the washing machine is set to delay the start of washing operation after pre-setting the washing operation in a desired mode. For setting a delayed start of washing operation, it is preferable in view of enhancing the convenience of use that the user is directed to preset either a specified time to finish the operation or a specified time to start the operation.

In this case, the washing machine is required to have a clock function to set a time of day.

In general, however, the recent washing machines are mostly constructed such that supply of power from the commercial power source to a control circuit of the washing machine is cut off when not in the washing operation. This is intended to save energy by reducing power consumption of the control circuit. In other words, the washing machine of a simple structure cannot maintain a clock running during the period in which the power supply is disconnected, and therefore the clock function cannot be kept operative. Here, the expression "clock running" means operation of the clock to tick and provide time of day, and the same also applies hereafter.

In the above instance, it is also possible to include a battery to supply power while the power supply from the commercial power source is cut off. However, the battery will need to be changed when it becomes dead. In this case, the battery is connected to an electrical system inside the washing machine provided with a waterproof or watertight construction, because of the product characteristic inherent to the washing machine that uses water. It is therefore difficult for the user to change the battery handily.

For this reason, a washing machine comprising any of a storage battery, an electric double layer capacitor, and the like is disclosed to achieve energy saving while also realizing the clock function in the washing machine (as examples, refer to Patent Literatures 1 and 2). The washing machine of the above structure charges the storage battery or the electric double layer capacitor at first when the power is turned on to start the washing machine. The structure is so configured that the process of running the clock is kept continued by supplying power from the charged storage battery or the electric double layer capacitor when the power supply to the washing machine is turned off.

The structure can thus eliminate the power consumption during a standby state of the washing machine. It is said, as a result, that the washing machine provided here can keep the clock function almost permanently without changing the battery.

In the structure of the conventional washing machine disclosed in Patent Literatures 1 and 2, however, there requires an addition of such device as one that composes a rechargeable backup power supply, a change-over switch for charging the device and supplying the power to run the clock, and the like. This results in an increase in cost of the washing machine. In addition, the backup power supply becomes discharged when the washing machine is left not operated for a long time. As a result, this gives rise to a problem that makes it unable to supply the power to run the clock function

JP 2003047796 A, published on 18 February 2003, discloses a conventional washing machine system in which preprogramming can be performed according to the features recited in the pre-characterizing part of claim 1. However, the washing machine of document D1 comprises a clock such that preprogramming settings are stored in the washing machine and it is determined whether or not the starting time has been reached only there.

### Citation List:

### Patent Literature

PTL 1: Unexamined Japanese Patent Publication No. 2005-251273
PTL 2: Unexamined Japanese Patent Publication No. 2006-246794

### SUMMARY OF THE INVENTION

To address the above-stated problem, the present invention discloses a washing machine system comprising a washing machine and a washing machine information server that can communicate with each other through a communications network. The washing machine information server comprises a time management section that keeps a clock running to show a current time of day, a command generation section that generates a command of various settings to be transmitted to the washing machine, a screen information generation section that generates screen information used for setting operation of the washing machine, and a communication unit that communicates through the communications network. The washing machine comprises an operation preprogramming control section that controls an operation preprogramming task of washing, and a communication unit that communicates through the communications network. Furthermore, the screen information generation section generates screen information for operation preprogramming setting used to specify and set a time of preprogrammed operation, and the command generation section compares the set time specified according to the screen information for operation preprogramming setting with the current time of the running clock in the time management section to obtain a difference from the current time, and generates an operation preprogramming command containing information of the difference converted into time information. The operation preprogramming command is transmitted to the washing machine via the communication unit of the washing machine information server and the communication unit of the washing machine. The operation preprogramming control section of the washing machine is configured to perform the operation preprogramming task based on the time information of the difference from the current time in the operation preprogramming command.

It is by virtue of the above configuration to achieve the washing machine system provided with an interface for executing the preprogram setting of washing operation by designating a time of day without requiring the washing machine to have a clock running function.

### BRIEF DESCRIPTION OF DRAWINGS

Fig. 1 is a schematic illustration of a washing machine system according to an exemplary embodiment of the present invention.
Fig. 2 is a conceptual diagram of washing operation according to this exemplary embodiment.
Fig. 3 is a schematic diagram of the washing machine system according to this exemplary embodiment.
Fig. 4 is a table showing one example of detergent database in a washing machine information server according to this exemplary embodiment.
Fig. 5 is a table showing one example of user information database in the washing machine information server according to this exemplary embodiment.
Fig. 6 is a flow chart of the washing machine system according to this exemplary embodiment.
Fig. 7 is another flow chart of the washing machine system according to this exemplary embodiment.
Fig. 8 is another flow chart of the washing machine system according to this exemplary embodiment.
Fig. 9 is another flow chart of the washing machine system according to this exemplary embodiment.
Fig. 10 is still another flow chart of the washing machine system according to this exemplary embodiment.
Fig. 11 is still another flow chart of the washing machine system according to this exemplary embodiment.
Fig. 12 is yet another flow chart of the washing machine system according to this exemplary embodiment.
Fig. 13 illustrates one example of display showing dispensing amounts of detergent and fabric softener in the washing machine according to this exemplary embodiment.
Fig. 14 illustrates another example of display showing dispensing amounts of detergent and fabric softener in a washing machine according to this exemplary embodiment.
Fig. 15 illustrates still another example of display showing dispensing amounts of detergent and fabric softener in the washing machine according to this exemplary embodiment.
Fig. 16 illustrates yet another example of display showing dispensing amounts of detergent and fabric softener in the washing machine according to this exemplary embodiment.
Fig. 17 illustrates one example of communication guidance screen displayed on a data terminal according to this exemplary embodiment.
Fig. 18 illustrates one example of apparatus operating menu screen displayed on the data terminal according to this exemplary embodiment.
Fig. 19 illustrates one example of detergent and fabric-softener setting menu screen in the data terminal according to this exemplary embodiment.
Fig. 20 illustrates one example of detergent selection screen displayed on the data terminal according to this exemplary embodiment.
Fig. 21 illustrates one example of detergent-related screen displayed on the data terminal according to this exemplary embodiment.
Fig. 22 illustrates one example of fabric-softener selection screen displayed on the data terminal according to this exemplary embodiment.
Fig. 23 illustrates one example of course selection screen displayed on the data terminal according to this exemplary embodiment.
Fig. 24 illustrates one example of operation preprogramming setting screen displayed on the data terminal according to this exemplary embodiment.
Fig. 25 illustrates one example of preprogrammed time setting screen displayed on the data terminal according to this exemplary embodiment.
Fig. 26 illustrates one example of cautionary message screen displayed on the data terminal according to this exemplary embodiment.
Fig. 27A is a flow chart of operation preprogramming setting in the washing machine system according to this exemplary embodiment.
Fig. 27B is also a flow chart of the operation preprogramming setting in the washing machine system according to this exemplary embodiment.
Fig. 28 is another flow chart of the operation preprogramming setting in the washing machine system according to this exemplary embodiment.
Fig. 29 is a flow chart of a operation preprogramming task of the washing machine system according to this exemplary embodiment.

### DESCRIPTION OF EMBODIMENTS

Description will be provided hereinafter of an exemplary embodiment of the present invention by referring to the accompanying drawings. Note that the following exemplary embodiment should not be construed as limiting the scope of the present invention.

### EXEMPLARY EMBODIMENT

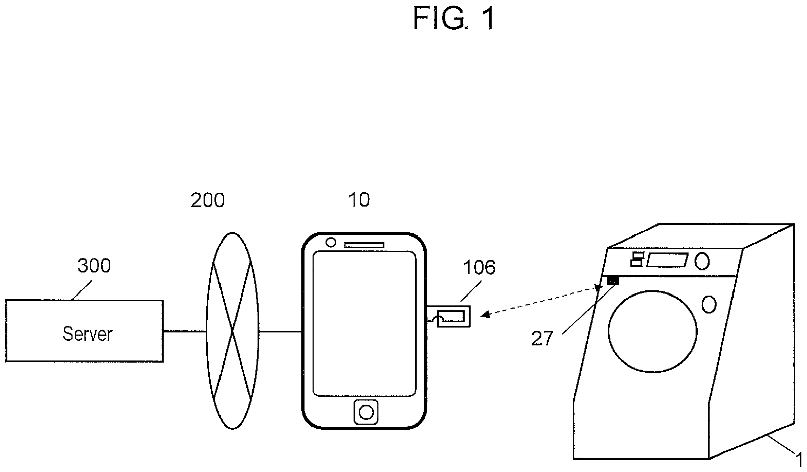

A washing machine system of this exemplary embodiment of the present invention is described hereinafter by referring to Fig. 1.

Fig. 1 is a schematic illustration of the washing machine system according to this exemplary embodiment of the invention.

As shown in Fig. 1, the washing machine system of this exemplary embodiment comprises at least washing machine 1 representing an electric apparatus, data terminal 10, and washing machine information server 300 (may be referred to hereinafter as a server). The washing machine system also includes an apparatus capable of communicating with a reader/writer through radio frequency identification ("RFID") or near field wireless communication (near field communication, or "NFC").

In addition, washing machine 1 communicates with data terminal 10 through loop antenna 27 disposed to washing machine 1 by using NFC, as shown in Fig. 1.

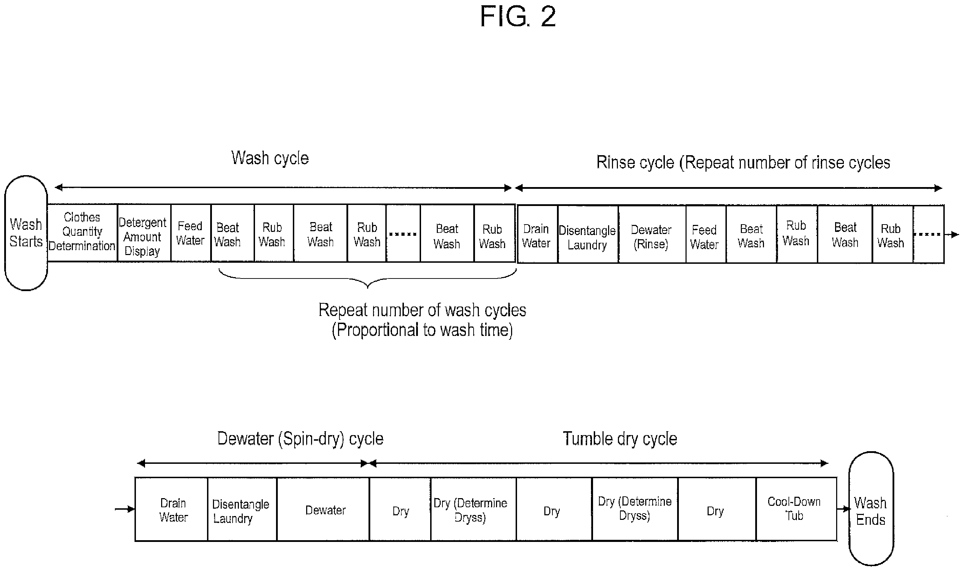

Here, a washing operation of washing machine 1 will be described briefly by referring to Fig. 2. Fig. 2 is a conceptual diagram of the washing operation of the washing machine according to this exemplary embodiment of the present invention.

That is, the washing operation of the washing machine includes at least one of wash cycle, rinse cycle, dewater cycle, and dry cycle, as shown in Fig. 2. Specifically, the wash cycle in the washing operation of washing machine 1 is to wash off soil by soaking clothes into detergent water and rotating a washing tub. The rinse cycle is to water-rinse the clothes soaked with the detergent water. The dewater cycle is to dehydrate the clothes containing water. The dry cycle is to dry the clothes by blowing warm air. In addition, each of the above cycles further includes various other steps. In the case of the wash cycle shown in Fig. 2, for example, there include a clothes-quantity determination step, a detergent-amount display step, a water feeding step, a press-washing step, a rub-washing step, and the like.

Data terminal 10 is comprised of a communications device like a portable telephone, for instance, and it is equipped with loop antenna 106, as shown in Fig. 1. Data terminal 10 can communicate with washing machine 1 through loop antenna 106 by the NFC method. In addition, data terminal 10 is communicatively connected with server 300 through network 200. Although data terminal 10 can be an apparatus of any type when provided with a reader/writer capable of communicating with the RFID or NFC of washing machine 1, an apparatus having portability is more preferable.

As shown in Fig. 1, server 300 is comprised of a well-known server computer, or the like device, and it is communicatively connected with data terminal 10 through network 200.

The washing machine system of this exemplary embodiment is configured as illustrated above.

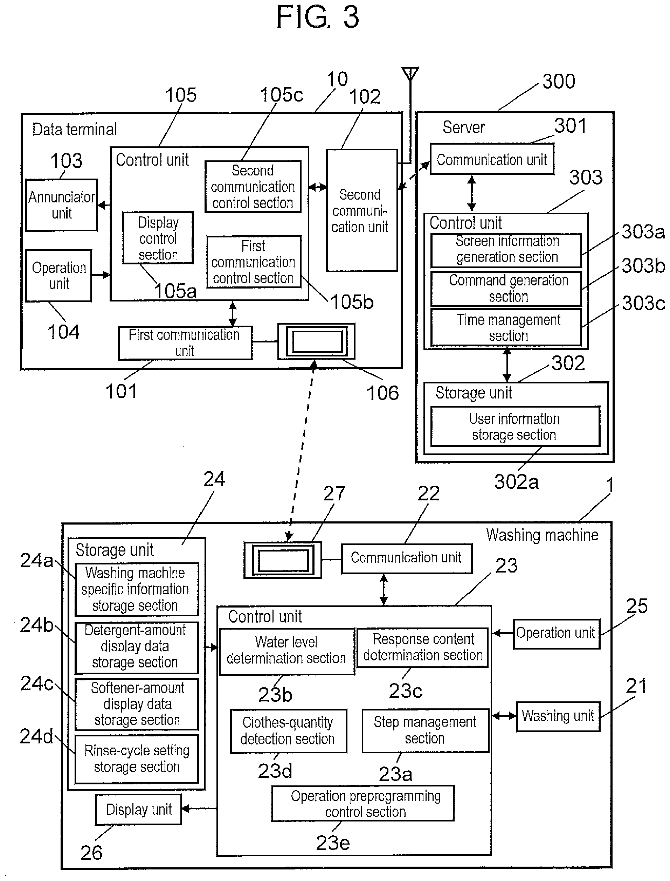

Referring to Fig. 3, description is provided hereinafter in detail about data terminal 10 of the washing machine system of this embodiment.

Fig. 3 is a schematic diagram of the washing machine system according to this exemplary embodiment of the present invention.

As shown in Fig. 3, data terminal 10 comprises at least first communication unit 101, second communication unit 102, annunciator unit 103, operation unit 104, control unit 105, and loop antenna 106.

At first, first communication unit 101 of data terminal 10 communicates with washing machine 1 by using NFC through loop antenna 106 that constitutes an antenna to carry out close proximity radio communication. The description provided in this exemplary embodiment is based on the premise that the close proximity radio communication represents RFID or NFC of high frequency band that uses a 13.56 MHz band, for instance. However, this does not mean to preclude other frequency bands. For example, frequency band of the close proximity radio communication may be any of VHF band and UHF band from 90 MHz to 1 GHz, or another frequency band exceeding 2 GHz.

In this case, the loop antennas of two communications devices that communicate with each other need to be brought close to each other since the close proximity radio communication is executed in a short communication distance. Therefore, a mark showing a position of the loop antenna is normally attached to a face of each of the communications devices where the loop antenna is disposed. The user brings the marks of the two communications devices closer, and makes them communicate with each other. This is for the reason that the RFID built inside the portable telephone cannot increase an output power fed to the loop antenna. It is therefore necessary that both the loop antennas are brought close to each other accurately with their positions aligned in the order of several millimeters, for example.

Data terminal 10 and washing machine 1 of the washing machine system are brought closer and the close proximity radio communication is carried out in a manner, which is described briefly as follows.

First of all, a magnetic flux passing through loop antenna 106 is generated when first communication unit of data terminal 10 passes an electric current through loop antenna 106. If loop antenna 106 and loop antenna 27 of washing machine 1 are sufficiently close to each other at this moment, the magnetic flux that passes through loop antenna 106 also passes through loop antenna 27 of washing machine 1. This causes a magnetic coupling between loop antennas 27 and 106.

When the first communication unit of data terminal 10 makes the electric current of loop antenna 106 vary under this condition, the magnetic flux that passes through loop antenna 106 varies. This also causes the magnetic flux that passes through loop antenna 27 to vary proportionally. Transmission of information from data terminal 10 to washing machine 1 is executed by detecting this variation of the magnetic flux by communication unit 22 of washing machine 1.

Moreover, the magnetic flux that passes through loop antenna 27 varies when load impedance at a feeding point of loop antenna 27 is changed by communication unit 22 of washing machine 1. This variation in the magnetic flux causes the electric current flowing through loop antenna 106 of data terminal 10 to vary. Transmission of information from washing machine 1 to data terminal 10 is executed by detecting this variation of the magnetic flux by the first communication unit of data terminal 10.

In other words, transmission and reception between washing machine 1 and data terminal 10 are carried out by the magnetic coupling of loop antennas 106 and 27, and generation of the magnetic flux through the magnetic coupling is achieved by the electric power fed to loop antenna 106 of data terminal 10. It is therefore not possible to increase the output power fed to loop antenna 106. It thus becomes necessary to bring loop antennas 106 and 27 close to each other.

Here, the description provided in this exemplary embodiment is an example in which first communication unit 101 uses the NFC to communicate with washing machine 1 through loop antenna 106. However, this does not mean to be restrictive, and that any method of wireless communications may be used such as one utilizing radio waves other than the NFC or light.

In addition, second communication unit 102 of data terminal 10 communicates with server 300 by using network 200 such as mobile communications network as an example.

Annunciator unit 103 of data terminal 10 displays a menu screen for assisting the user to select and set detergent and fabric softener for use with washing machine 1, a communication guidance screen for directing the user to transmit information of the selected detergent and fabric softener to washing machine 1, a menu screen for the user to set operation preprogramming, and the like.

Operation unit 104 of data terminal 10 comprises a touch panel or an operational keyboard, for instance, and it accepts input operation of the user. In other words, operation unit 104 is used for the input operation associated with the menu screen for selection and setting detergent and fabric softener, the menu screen for setting operation preprogramming, and the like displayed on annunciator unit 103.

Control unit 105 of data terminal 10 controls the whole of data terminal 10, and, it further comprises display control section 105a, first communication control section 105b and second communication control section 105c. Display control section 105a in control unit 105 controls display items to be displayed on the screen of annunciator unit 103, such that it switches to the communication guidance screen after selection and setting of the detergent or the fabric softener are completed on the selection and setting screen. First communication control section 105b controls first communication unit 101. Second communication control section 105c controls second communication unit 102. In this exemplary embodiment, the above-stated communication guidance screen is such a screen that instructs the user to bring loop antenna 106 of data terminal 10 close to loop antenna 27 of washing machine 1, for instance, when making first communication unit 101 communicate with washing machine 1. To be concrete, first communication unit 101 of data terminal 10 transmits information of the detergent and fabric softener to washing machine 1 when the distance between first communication unit 101 and washing machine 1 becomes close enough to enable the communications.

Second communication unit 102 receives screen information that is determined by server 300, and is to be displayed on annunciator unit 103 of data terminal 10. Here, the screen information to be displayed includes any of a screen data output to the menu screen for assisting the user to select and set detergent and fabric softener used with washing machine 1, a screen data output to the screen for displaying the selected detergent and fabric softener, the guidance screen for directing the user to bring data terminal 10 and washing machine 1 close to each other, and the menu screen for the user to make operation preprogramming setting with washing machine 1, for example. In addition, second communication unit 102 receives information that is determined by server 300, and is to be transmitted to washing machine 1. Here, the information to be transmitted to washing machine 1 includes any of information corresponding to the detergent and fabric softener selected by the user and used to control washing machine 1 and to display, information for the user to set operation preprogramming of washing machine 1, and the like.

Next, description is provided in detail of washing machine 1 of the washing machine system according to this exemplary embodiment by referring to Fig. 3.

Washing machine 1 comprises at least washing/rinsing/dewatering/drying unit 21 (hereafter referred to as washing unit 21) for performing washing, rinsing, dewatering, drying and the like that are the primary functions of the washing machine, communication unit 22, control unit 23, storage unit 24, operation unit 25, display unit 26, and loop antenna 27, as shown in Fig. 3.

Washing unit 21 of washing machine 1 is constructed to perform the individual functions of washing, rinsing, dewatering and drying. More specifically, it comprises a motor for rotating a washing drum, a water feed valve for adjusting an amount of supply water, a drain valve for draining the water, a circulation pump for circulating washing water (i.e., detergent water and rinse water), a pass pump for drawing up bath water into washing machine 1, a heater for generating warm air for drying, a blower fan for circulating the pump, and the like.

Communication unit 22 of washing machine 1 uses close proximity radio communication to transmit to and receive from data terminal 10 various information in two-way communications through loop antenna 27 that is an antenna configured to carry out the close proximity radio communication. In this exemplary embodiment, communication unit 22 represents an example of receiver and transmitter.

Control unit 23 of washing machine 1 is configured of a microcomputer or the like device, and equipped with a memory (not shown) that stores programs and data prepared beforehand to make washing machine 1 function.

Control unit 23 further comprises step management section 23a, water level determination section 23b, response content determination section 23c, clothes-quantity detection section 23d, and operation preprogramming control section 23e. Step management section 23a manages the steps executed in each of the operations (i.e., washing, rinsing, dewatering and drying) and controls washing unit 21 at the same time. Here, control of washing unit 21 means such functions as controlling rotation of the motor by detecting wobbling of the washing drum, controlling opening and closing of the water feed valve and the drain valve by detecting a level of the water supplied to the washing drum, controlling switching on and off of the heater by detecting a temperature of the warm air, and the like.

Clothes-quantity detection section 23d of control unit 23 controls washing unit 21, and detects a quantity of clothes put into washing machine 1. To be specific, clothes-quantity detection section 23d detects a quantity of the clothes put into the washing drum by controlling washing unit 21 in a manner that the motor that rotates the washing drum is driven with a constant torque, and monitoring a rotating speed of the washing drum. Here, the method of detecting quantity of the clothes needs not be limited to that described above, but it can be any other method capable of detecting a quantity of the clothes put into washing machine 1. For example, a method of detecting the clothes quantity according to a changing speed of water level inside the washing drum while supplying the water, and another method of detecting the clothing quantity by using a weight meter disposed in a structural component that supports the washing drum are also adoptable.

Water level determination section 23b of control unit 23 determines a level of water supplied to the washing drum in the washing operation. In this case, water level determination section 23b determines the water level that corresponds to the quantity of clothes detected by clothes-quantity detection section 23d. To be specific, it determines the water level to be higher when the quantity of clothes is large, and the water level to be lower when the quantity is small. As a result, it can achieve the necessary washing and rinsing performance with an optimum level and amount of the water corresponding to the quantity and the like of the clothes put into washing machine 1. Water level determination section 23b supplies the water to a different level in the washing drum, however, when such a water level setting is directed by the user through operation unit 25.

Response content determination section 23c of control unit 23 is a processing section that determines content of a response to an inquiry of specific information related to the washing machine when it receives the inquiry from data terminal 10 via communication unit 22 of washing machine 1. When it receives a signal of inquiring specific information of washing machine 1 such as a current status or the like of washing machine 1, for instance, it determines a content of response to the inquiry signal and processes it accordingly.

Operation-preprogramming control section 23e of control unit 23 carries out control necessary to execute the operation-preprogramming task of washing. More specifically, operation-preprogramming control section 23e first calculates a time needed to stay standing by before the start of operation, according to the time that the user set to finish the operation and the time required for the preprogrammed operation of the washing step on the basis of information from display unit 26 and operation unit 25. Upon a lapse of the stand-by time, operation preprogramming control section 23e controls so that control unit 23 start controlling washing unit 21.

Storage unit 24 of washing machine 1 comprises washing-machine specific information storage section 24a, detergent-amount display data storage section 24b, softener-amount display data storage section 24c, and rinse-cycle setting storage section 24d.

Washing-machine specific information storage section 24a of storage unit 24 contains washing machine's specific information that can identify washing machine 1, such as a type number and a serial number of washing machine 1, which are stored beforehand at the time of manufacturing, or the like process.

Detergent-amount display data storage section 24b of storage unit 24 stores information used to determine an amount of detergent is to be dispensed during washing in washing machine 1, on the basis of a type of the detergent specified by the user through data terminal 10 and the water level determined by water level determination section 23b.

Softener-amount display data storage section 24c of storage unit 24 stores information used to determine an amount of fabric softener to be dispensed during washing in washing machine 1, on the basis of a type of the fabric softener specified by the user through data terminal 10 and the water level determined by water level determination section 23b.

Rinse-cycle setting storage section 24d of storage unit 24 stores information on a number of rinse cycles to be repeated during the washing of washing machine 1. Step management section 23a of control unit 23 then determines a number of rinse cycles to be executed when rinsing in the rinsing operation shown in Fig. 2 according to the information stored in rinse-cycle setting storage section 24d, and controls washing unit 21 accordingly.

Operation unit 25 of washing machine 1 is constructed of an operation button and the like devices, and it accepts input operation of the user.

Display unit 26 of washing machine 1 comprises such an element as a seven-segment LED, and it digitally displays a water level setting, a washing time, a number of rinse cycles, a dewatering time, an amount of the detergent, an amount of the fabric softener, a remaining time, a preprogrammed time, and the like. In the above exemplary embodiment, what has been described is an example in which operation unit 25 is constructed of an operation button, and display unit 26 has a seven-segment LED to display. However, the above exemplary embodiment is not intended to limit the structure. For instance, display unit 26 may be constructed of a liquid crystal panel, or operation unit 25 may be constructed of a touch panel. Moreover, display unit 26 can be constructed of a dot-matrix type liquid crystal panel, so that a part or all of operation unit 25 is composed of a touch panel in combination with the liquid crystal panel of display unit 26. In this case, the buttons for presenting choices to the user can be displayed in a form of figure, for example, along with other information by using texts, photographs and illustrations on the liquid crystal panel. In this way, the choice selected by the user can be detected with the touch panel in a button area displayed as a figure in the liquid crystal panel. As a result, it can provide the user with information and operation unit 25 that become more intuitive and comprehensible.

Next, description is provided in detail of server 300 of the washing machine system of this exemplary embodiment by referring to Fig. 3.

As shown in Fig. 3, server 300 comprises at least communication unit 301, storage unit 302 and control unit 303. Communication unit 301 communicates with data terminal 10 by the use of network 200. Storage unit 302 stores a menu screen displayed on data terminal 10 for each product of washing machine 1. Additionally, storage unit 302 also stores information of various kinds of detergent and fabric softener, amounts of the detergent and fabric softener corresponding to their individual kinds to be dispensed per a standard quantity of the clothes, and number of the rinse cycles recommended on the basis of characteristics of the detergent, which are to be displayed on data terminal 10.

Storage unit 302 of server 300 is additionally provided with user-information storage section 302a for storing user information database that records various setting information for each of the users.

Control unit 303 of server 300 is composed of a CPU or the like devices, and it controls operation of communication unit 301. Control unit 303 also generates information to be transmitted to data terminal 10 through communication unit 301 based on information received through communication unit 301 and the information stored in storage unit 302.

In addition, control unit 303 of server 300 comprises screen information generation section 303a, command generation section 303b, time management section 303c, and the like. Screen information generation section 303a generates screen information to be displayed on annunciator unit 103 of data terminal 10. Command generation section 303b generates a command to notify and to set various settings for washing machine 1. Time management section 303c manages the current time of day.

The washing machine system of this exemplary embodiment is configured of washing machine 1, data terminal 10 and server 300 described above.

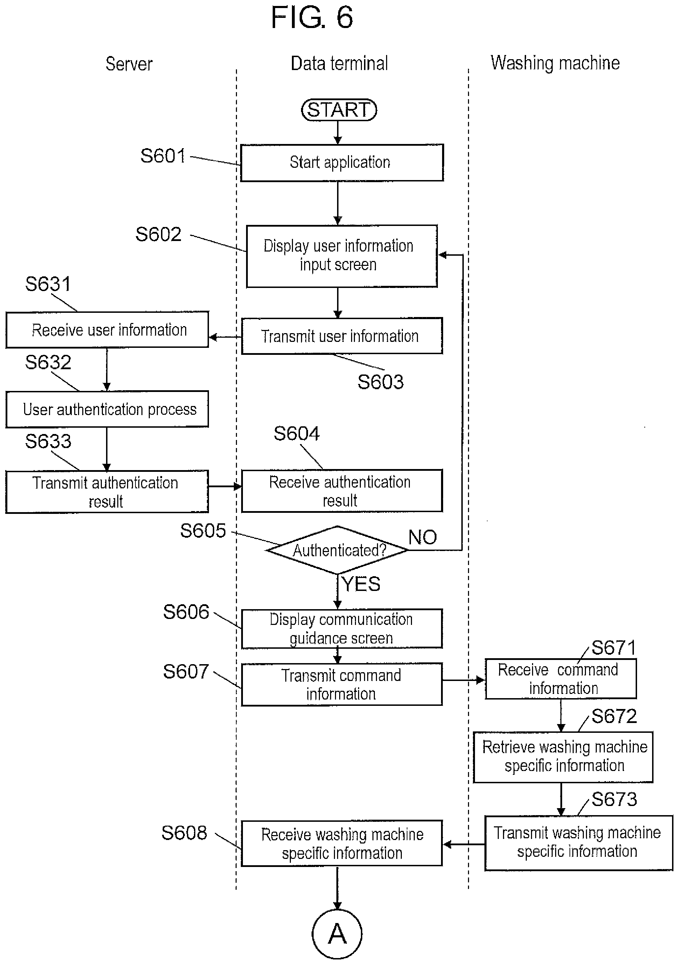

Description is provided hereinafter about operation of the washing machine system according to this exemplary embodiment of the present invention by referring to Fig. 3, together with Fig. 6 through Fig. 12, showing a series of operating flow.

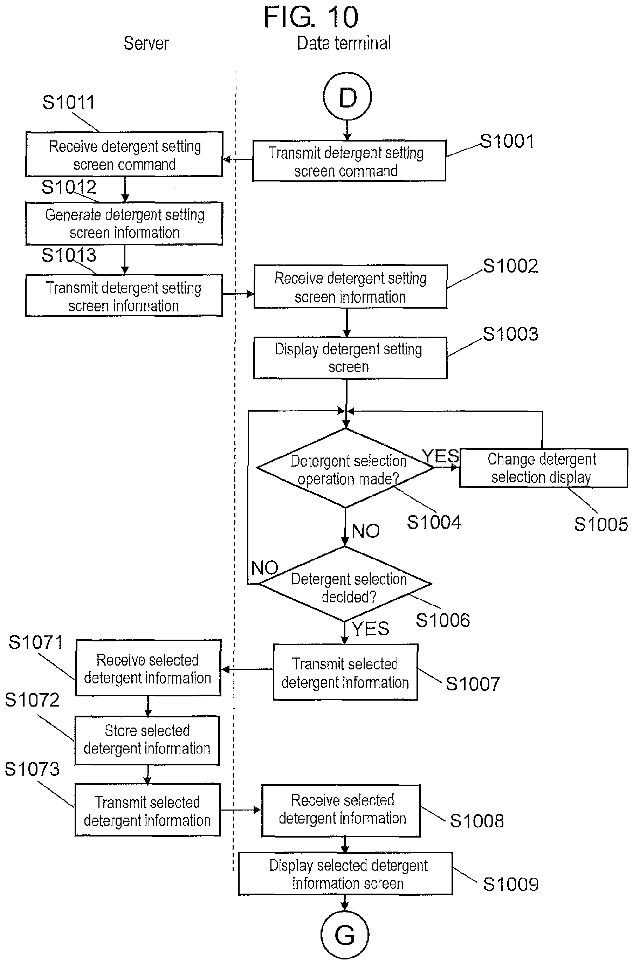

Fig. 6 through Fig. 12 are flowcharts of the washing machine system in this exemplary embodiment of the present invention. Fig. 6 to Fig. 9 are the flowcharts that illustrate operation of the user to select and set any of detergent and fabric softener, and a flowchart in Fig. 10 illustrates operation of the washing machine related to setting of the selected detergent and/or fabric softener.

By using Fig. 6, description is provided first pertaining to the operation of the washing machine system of this exemplary embodiment.

First of all, control unit 105 of data terminal 10 starts the application to display a screen on annunciator unit 103 for control of washing machine 1, as indicated in Fig. 6 (step S601). At this moment, operation unit 104 receives an instruction to start the particular application by the user. Control unit 105 thus starts the given application according to the received start instruction.

Next, display control section 105a displays a menu screen to let the user input user information (step S602). Here, the user information is such information as an identification number ("ID number") and a password that identify the user, for instance, that have been preregistered by the user and stored in server 300 in advance before this step is executed. In specific, the menu screen for urging input of the ID number and the password is displayed on annunciator unit 103 of data terminal 10, so that the user can input the ID number and the password through operation unit 104.

Next, data terminal 10 transmits to server 300 the received ID number and password (step S603).

Server 300 thus receives the ID number and the password transmitted from data terminal 10 (step S631).

Next, server 300 compares the ID number and the password received in step S631 with the ID number and the password stored beforehand in server 300, and determines whether they match or not. A process of authentication can be thus executed as to whether or not it is the preregistered user (step S632).

Subsequently, a result of the authentication is transmitted to data terminal 10 (step S633). Data terminal 10 hence receives the result of the authentication of the user from server 300 (step S604).

Next, data terminal 10 determines whether or not the result of the authentication is acceptable (step S605). If the authentication is found not acceptable (i.e., "NO" in step S605), the process is returned to step S602 to display the user information input screen again, and instructs the user to input again a correct ID number and password.

When the result of the authentication is found acceptable (i.e., "YES" in step S605), on the other hand, annunciator unit 103 is controlled to display a communication guidance screen that directs the user to bring first communication unit 101 close to washing machine 1 so that first communication unit 101 and washing machine 1 establish communications with each other. As a result, annunciator unit 103 displays the communication guidance screen (step S606). The communication guidance screen is a screen that specifically directs the user to bring loop antenna 106 of data terminal 10 close to loop antenna 27 of washing machine 1. The communication guidance screen is stored in advance in a storage unit (not shown) provided in data terminal 10. Thus, display control section 105a reads out the communication guidance screen from the storage unit of data terminal 10, and displays it.

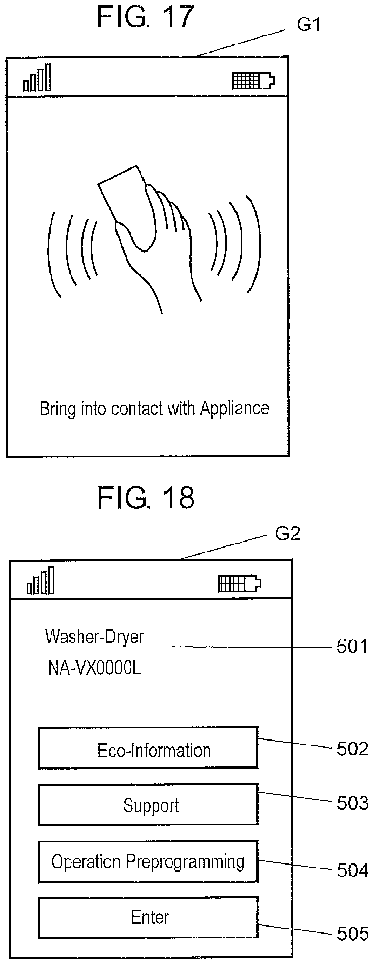

Described here, with reference to Fig. 17 is an example of the communication guidance screen displayed on annunciator unit 103 of data terminal 10.

Fig. 17 illustrates one example of the communication guidance screen displayed on the data terminal according to this exemplary embodiment of the present invention.

As shown in Fig. 17, there appears a message of "Please touch the pertinent electric appliance", for example, displayed on communication guidance screen G1. This communication guidance screen G1 is a screen for guiding the user to bring data terminal 10 close to washing machine 1. According to communication guidance screen G1, the user places loop antenna 106 of data terminal 10 near loop antenna 27 of washing machine 1 so that a distance between data terminal 10 and washing machine 1 becomes sufficiently close to communicate by means of the close proximity radio communication.

Note that the use of close proximity radio communication by having the user bring loop antenna 106 of data terminal 10 close to loop antenna 27 of washing machine 1 requires the user to have an operational task during the communication. However, it can make the user aware of the task of explicitly selecting the communication object to be communicated with data terminal 10. As a result, the user can intuitively specifies the apparatus to be operated even when he has a plural number of apparatuses as the operational objects.

After the communication guidance screen is displayed on annunciator unit 103 of data terminal 10, first communication control section 105b directs first communication unit 101 to have it transmit to washing machine 1 a command information for requesting a washing-machine specific information that identifies washing machine 1 (step S607), as shown in Fig. 6. More specifically, first communication unit 101 starts the transmission of command information to washing machine 1 in coordination with the display of the communication guidance screen on annunciator unit 103.

Next, communication unit 22 of washing machine 1 receives the command information transmitted from first communication unit 101 of data terminal 10 (step S671).

Following the above, response content determination section 23c of control unit 23 in washing machine 1 retrieves washing machine specific information from washing-machine specific information storage section 24a in storage unit 24 (step S672).

Response content determination section 23c of control unit 23 then controls and makes communication unit 22 transmit the washing machine specific information to data terminal 10 (step S673). At this time, the command information includes address information that specifies data terminal 10. In other words, communication unit 22 transmits the washing machine specific information to data terminal 10 corresponding to the address information included in the command information.

In this instance, response content determination section 23c may send status information of washing machine 1 such as a use history and error information to data terminal 10 in addition to the washing machine specific information. The error information mentioned above means such information as conditions of various loads like the motor and heater of washing unit 21, information detected by monitoring data being sensed by the water level sensor, temperature sensor, and the like.

Subsequently, first communication unit 101 of data terminal 10 receives the washing machine specific information transmitted from communication unit 22 of washing machine 1 (step S608).

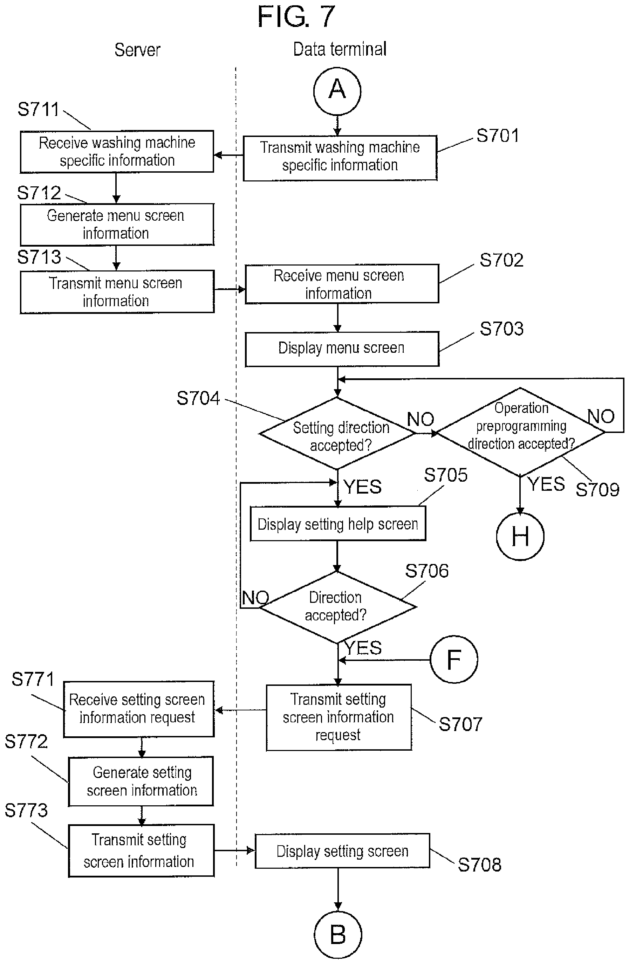

Referring to Fig. 7, described hereinafter are the processes that follow after step S608.

As shown in Fig. 7, second communication control section 105c of data terminal 10 controls and makes second communication unit 102 transmit to server 300 the washing machine specific information received via first communication unit 101 (step S701). The washing machine specific information is transmitted together with address information that specifies server 300, to be specific. Second communication unit 102 thus transmits the washing machine specific information to server 300 corresponding to the address information transmitted along with the washing machine specific information.

Although what has been described in this exemplary embodiment is an example of transmitting the address information for specifying server 300 together with the washing machine specific information, this is not intended to be restrictive. For instance, the address information for specifying server 300 may be stored in data terminal 10.

Communication unit 301 of server 300 receives the washing machine specific information transmitted from second communication unit 102 of data terminal 10 (step S711).

Next, control unit 303 of server 300 retrieves from storage unit 302 a menu screen corresponding to washing machine 1 specified by the washing machine specific information, and generates menu screen information (step S712).

Communication unit 301 transmits to data terminal 10, menu screen information that is generated to display a menu screen unique to washing machine 1 (step S713).

Second communication unit 102 of data terminal 10 thus receives the menu screen information transmitted from communication unit 301 of server 300 (step S702).

Next, display control section 105a switches the display screen to a menu screen based on the menu screen information received by second communication unit 102, and annunciator unit 103 displays the menu screen according to the menu screen information received by second communication unit 102 (step S703).

Although what has been described above is an example of the method of specifying the electric apparatus such as washing machines 1 by making data terminal 10 transmit a command information to the electric apparatus, and then the electric apparatus send back a response to the command information, this is not meant to be restrictive.

Another method of specifying the electric apparatus is described as follows.

First, data terminal 10 acquires information of a list of menu screens unique to individual electric apparatuses that is useful for server 300 after completion of the user authentication in step S605 of Fig. 6, and displays the acquired list on annunciator unit 103. The user selects one of the electric apparatuses being used by means of operation unit 104. Accordingly, data terminal 10 can transmit whichever the list selected to server 300. In other words, second communication unit 102 of data terminal 10 receives the menu screen information transmitted from communication unit 301 of server 300 (step S702), so that display control section 105a of data terminal 10 can switch the display screen to a menu screen on the basis of the menu screen information received via second communication unit 102 (step S703). In this way, the menu screen can be displayed without making data terminal 10 and washing machine 1 communicate with each other in order to display the menu screen.

In this case, operation unit 104 of data terminal 10 accepts a selection of any of the items displayed in the menu screen by the user while the menu screen is being displayed. Hence, the menu screen is displayed according to the item selected, and washing machine 1 controlled according to the item selected.

Next, a determination is made as to whether or not a setting direction has been accepted for any of the items displayed in menu screen, details of which will be described below by referring to Fig. 18 (step S704).

Fig. 18 illustrates one example of the apparatus operating menu screen displayed on the data terminal according to this exemplary embodiment of the present invention.

As shown in Fig. 18, those displayed in menu screen G2 are, for example, product name 501, eco-information display button 502, support information display button 503, operation preprogramming button 504, and setting display button 505. In this instance, product name 501 indicates a generic name, product model number, and the like of washing machine 1. Eco-information display button 502 displays information related to an energy saving condition of washing machine 1. Support information display button 503 displays support information of washing machine 1. Operation preprogramming button 504 is used to make a preprogramming setting for washing operation. Setting display button 505 is used to set information on detergent and fabric softener of the washing machine.

In addition, each of eco-information display button 502, support information display button 503, operation preprogramming button 504, and setting display button 505 in the menu screen G2 can be selected by operation unit 104, so that various contents of the selected button are further displayed. Specifically, when eco-information display button 502 is selected, for instance, information related to energy saving such as a power consumption of washing machine 1 is displayed on the screen. When support information display button 503 is selected, on the other hand, supporting information of washing machine 1 is displayed on the screen.

The items displayed in menu screen G2 are not limited to those shown in Fig. 18, but various other items can also be displayed.

The menu screens of this exemplary embodiment are configured as describe d above.

In the above-described step S704, when setting display button 505 in the menu screen G2 of Fig. 18 is accepted ("YES" in step S704), for instance, a setting help screen is displayed on annunciator unit 103 of data terminal 10 (step S705). The setting help screen, though not specifically shown in the drawing, is an explanatory screen for the user that includes descriptive texts about a method of setting detergent and fabric softener, for example. The setting help screen also includes a button displayed for accepting a shift to the next step after the user has confirmed the contents of the explanation.

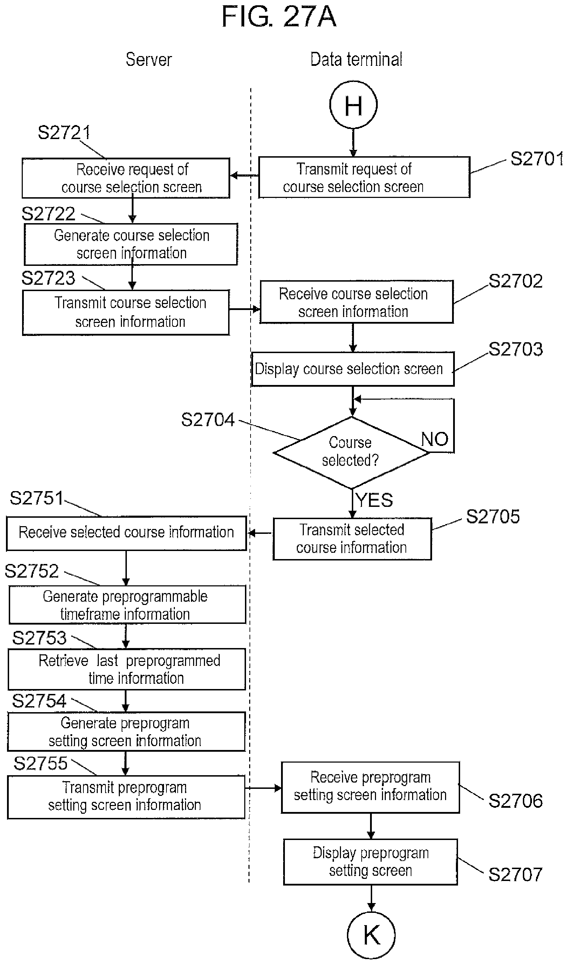

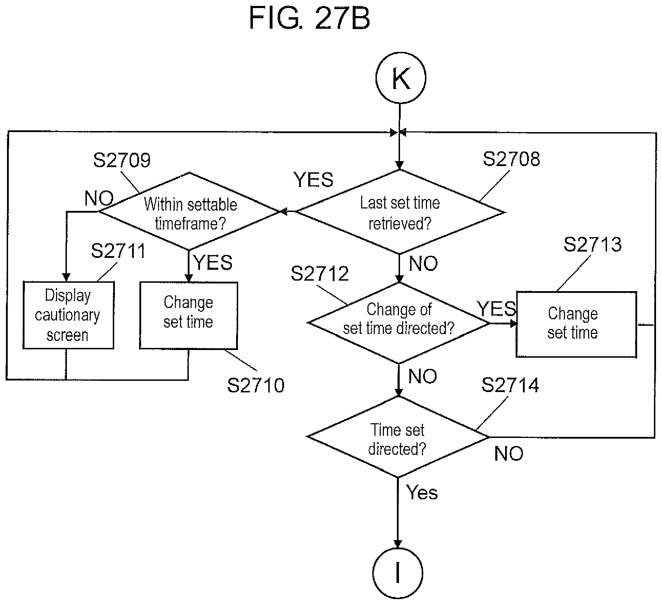

In the case that no setting direction is accepted ("NO" in step S704), on the other hand, determination is made as to whether or not an operation preprogramming direction is accepted (step S709). When an operation preprogramming direction is accepted at this time ("YES" in step S709), the process proceeds to step (H) to execute setting of the operation preprogramming. This corresponds to the case in which operation preprogramming button 504 is selected in menu screen G2 of Fig. 18, and other processes following the step (H) will be described in a later part by using Fig. 27A and Fig. 27B.

If no operation preprogramming direction is accepted ("NO" in step S709), on the other hand, the process is returned to step S704, and the same processes are repeated until the instruction is accepted.

Next, after a setting help screen is displayed in step S705, determination is made as to whether or not shifting to the next step is directed by the user with a button for accepting the shift to the next step displayed in the setting help screen (step S706). At this time, if shifting to the next step is not directed by the user ("NO" in step S706), the process is returned to step S705, and the same processes are repeated until the direction is received.

On the other hand, when the direction of shifting to the next step is accepted from the user ("YES" in step S706), a command for setting screen information is transmitted to server 300 (step S707).

Subsequently, server 300 receives the command for setting screen information from data terminal 10 (step S771). Then, server 300 retrieves a setting content relating to detergent and fabric softener stored for each user in storage unit 302, generates setting screen information to be displayed on data terminal 10 (step S772), and transmits the setting screen information to data terminal 10 (step S773).

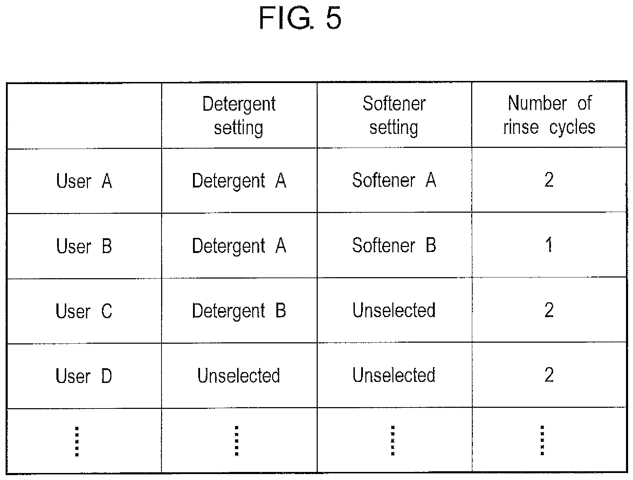

Description is provided here about one example of user information database that serves as the basis of setting screen information displayed on annunciator unit 103 of data terminal 10, by referring to Fig. 5.

Fig. 5 is a table showing one example of the user information database in the washing machine information server according to this exemplary embodiment of the present invention. The user information database is stored for each user in user-information storage section 302a.

As shown in Fig. 5, the user information database stores user specific information that identifies a user, washing machine specific information (not shown) that identifies a washing machine, designations of detergent and fabric softener, setting of rinse cycles, a preprogrammed operation finish time set last time (not shown) and the like in each row for each user, for example. In an instance of user A, a washing machine designated by a code of NA-VX4200L-W-00000001 is registered as a washing machine specific information, and other data are also stored such as a preprogrammed operation finish setting has been made in the past with the time set at 7 o'clock in the morning, though not shown in the figure. In addition, detergent A and softener A are registered in their respective columns, and a preset value of 2 is stored as the number of rinse cycles for the user A, as shown in Fig. 5. The above-noted user is identified by the ID number that the user has input for his identification purpose in step S602 shown in Fig. 6.

The user information database is configured as described above.

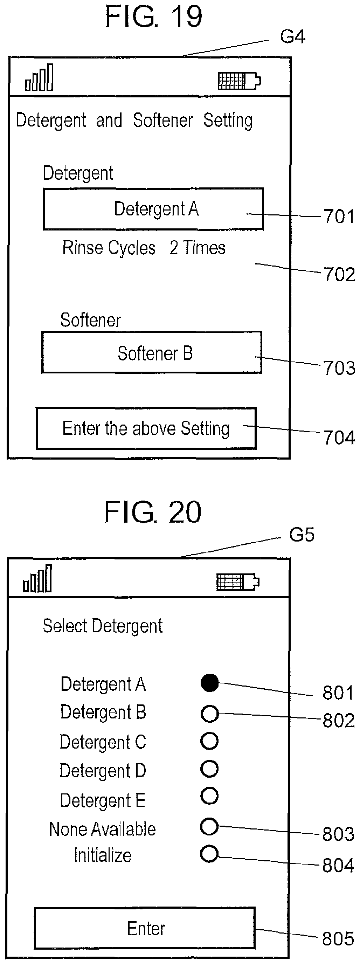

Next, data terminal 10 displays a setting screen, which will be described below with reference to Figs. 19, based on the setting screen information transmitted from server 300, as shown in Fig. 7 (step S708).

Fig. 19 illustrates one example of the setting menu screen for detergent and fabric softener in the data terminal according to this exemplary embodiment of the present invention.

As shown in Fig. 19, screen G4 of data terminal 10 displays buttons 701, 703 and 704, display 702, and the like. Button 701 displays a brand name of detergent that the user has set previously, and, when button 701 is chosen, data terminal 10 reads out and displays another screen showing various brand names of detergent for selection. Button 703 displays a brand name of fabric softener in the same manner as button 701, and, when button 703 is chosen, data terminal 10 reads out and displays another screen showing various brand names of fabric softener for selection. Display 702 displays a setting that shows a number of rinse cycles to be carried out in the washing operation. Button 704 is a button for executing a process of setting washing machine 1 with the information relating to the selected detergent and fabric softener.

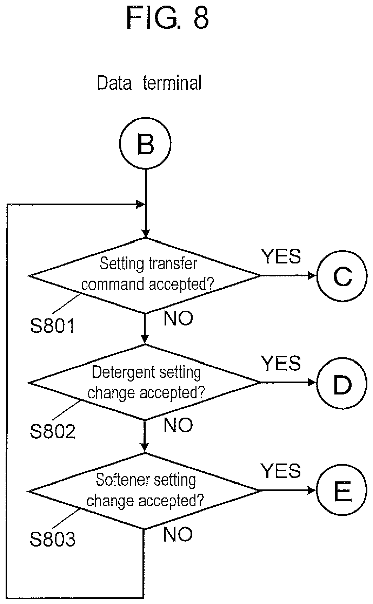

Referring to Fig. 8, description is provided here about the process relating to screen G4 that shows a menu screen for setting the detergent and the fabric softener.

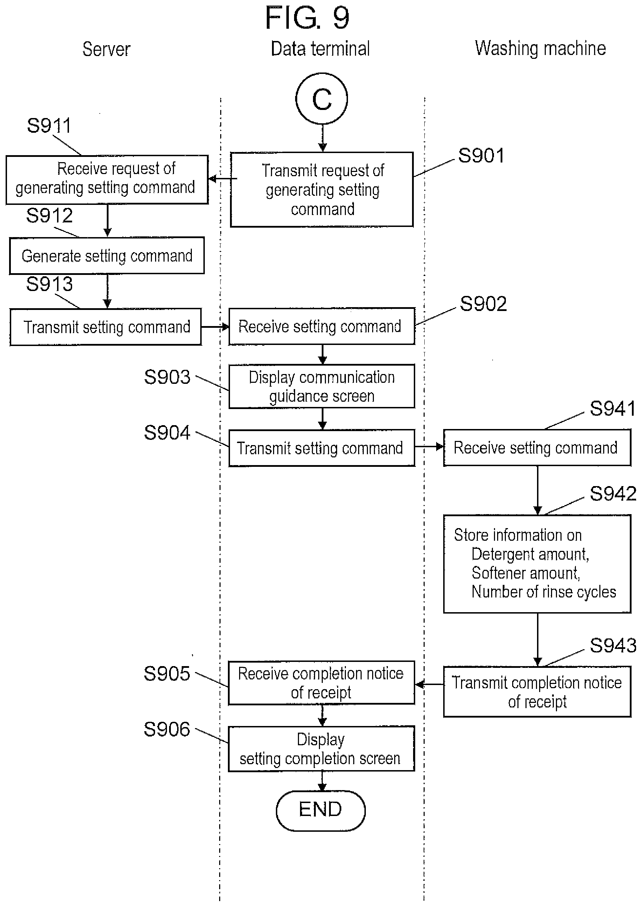

Next, after the setting screen is displayed in step S705 of Fig. 7, determination is made as to whether or not button 704 of screen G4 in Fig. 19 is selected, wherein button 704 serves to accept a setting transfer command for setting washing machine 1 with the information that relates to the detergent and the fabric softener for washing machine 1, as shown in Fig. 8 (step S801). When button 704 is selected ("YES" in step S801), the process proceeds to step (C) which will be described in a later part with reference to Fig. 9.

If a command for transferring the setting is not received ("NO" in step S801), on the other hand, determination is made as to whether or not to change the setting of the detergent (step S802). When button 701 is chosen to select a certain brand of the detergent ("YES" in step S802), the process proceeds to the next step, which will be described in a later part with reference to Fig. 10 (step (D)).

If, on the other hand, the setting of the detergent in not changed ("NO" in step S802), determination is made as to whether or not to change the setting of the fabric softener (step S803). In the case button 703 is chosen to select a certain brand of the fabric softener ("YES" in step S803), the process proceeds to the step of selecting a certain brand of the fabric softener (step (E)). In this exemplary embodiment, description is provided hereinafter by taking the step (D) since the step (E) is generally similar to the processes of the step (D) for selecting a brand of the detergent.

A series of the processes for setting a brand of the detergent is described next by using Fig. 10, in the instance that any of brands of the detergent is selected in step S802 of Fig. 8.

First, data terminal 10 transmits to server 300 a command for displaying a detergent setting screen, as shown in Fig. 10 (step S1001).

Next, when server 300 receives the command of detergent setting screen from data terminal 10 (step S1011), it generates detergent setting screen information (step S1012). Note that the detergent setting screen information is generated by using information in the database of the detergent brands stored in storage unit 302 and the database of the detergent brand setting stored for each user that is being selected.

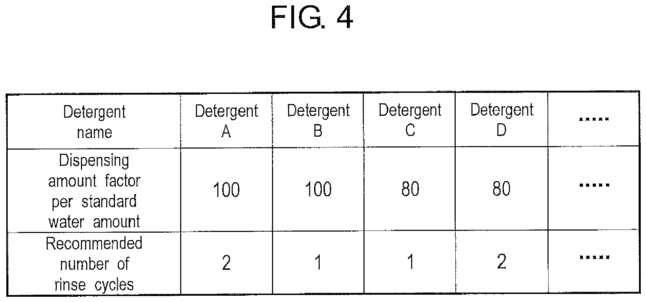

Description is provided here of one example of the detergent database that serves as the basis of the detergent setting screen information generated by the washing machine information server, by referring to Fig. 4.

Fig. 4 is a table showing one example of the detergent database in the washing machine information server according to this exemplary embodiment of the present invention. In the detergent database, there are such data as various names of detergents, a factor of dispensing amount corresponding to each of the detergents to be dispensed per a standard amount of water, a number of rinse cycles recommended for each brand of the detergent, and the like, which are stored in server 300. It is hence possible to deal easily with any change of detergent and the like as the entire washing machine system by renewing the detergent database of server 300 even when new detergent is introduced in the market.

Described hereinafter pertains to an amount of the detergent to be dispensed into the washing drum during the washing operation of washing machine 1 according to this exemplary embodiment. In general, there are cases wherein a large amount of bubbles evolves if an amount of the detergent dispensed during washing is excessive, which tends to cause the bubbles to overflow from the washing machine, or the bubbles to drain down from a drain port when the water is being discharged. In addition, a load imposed on the motor increases during spin-drying if the dewatering operation is carried out under the condition that a large amount the bubbles remain evolved. On the other hand, a problem still exists such that an optimum washing performance is not obtainable if the amount of the detergent is a too little.

It is therefore necessary to dispense the detergent of an appropriate amount in order to avoid the above problems. A proper amount of the detergent varies, however, depending on an amount of water supplied to the washing machine. In the case of a drum-type washing machine that uses a small amount of water, for example, it is very likely that an excessive amount of bubbles evolves if a large amount of detergent is dispensed. Many detergents normally carry instructions that indicate appropriate amount to be dispensed on each of their packages. However, the appropriate dispensing amount of the detergent is provided based only upon an assumption of using water of a certain standard amount, and the appropriate dispensing amount is indicated by weight corresponding to that amount of water. In addition, it is neither simple nor easy to measure the weight each time before the washing even if it is indicated by weight. It is for this reason that a measuring instrument such as a scoop is normally enclosed with the detergent, and a number of scoops in the measuring instrument is marked additionally. However, enclosed measuring instruments are different in sizes due to difference in kinds of the detergents. Therefore, the marked numbers of scoops of the measuring instruments differ from one another depending on the detergents even when the standard amounts of water are the same.

Accordingly, Fig. 4 shows a number of scoops for the washing machine to perform properly with each of the detergents, as a detergent dispense amount factor corresponding to the standard amount of water shown in the detergent database. In other words, it shows that what number of scoops is an appropriate dispensing amount to the standard amount of water by using the measuring instrument enclosed with the detergent. When taking the example of Fig. 4, to be concrete, a figure of 100 is shown as the detergent dispense amount factor of detergent A that corresponds to the standard amount of water. This indicates that a dispensing amount given by 100/100=1 scoop using the measuring instrument enclosed with the detergent is appropriate to the standard amount of water. On the other hand, the detergent dispense amount factor of the detergent C indicates that a dispensing amount of 80/100=0.8 scoop is appropriate.

In this exemplary embodiment, a fabric softener database for various fabric softeners (not shown) similar to that of the detergents is stored in the washing machine information server. In this case, information on the recommended number of rinsing cycles is not necessary in the fabric softener database.

The detergent database of this exemplary embodiment is configured as described above.

Server 300 transmits to data terminal 10 a detergent setting screen information generated in step S1012 based on the above detergent database, as shown in Fig. 10 (step S1013).

Next, after the detergent setting screen information is received (step S1002), data terminal 10 displays a detergent setting screen (step S1003).

Here, one example of the detergent washing screen displayed on data terminal 10 is described by referring to Fig. 20.

Fig. 20 illustrates one example of the detergent selection screen displayed on the data terminal according to this exemplary embodiment of the present invention.

As shown in Fig. 20, there are names of various brands of detergents stored in server 300, buttons for selecting applicable detergents, and the like displayed on screen G5. Button 801 is selected when detergent A is chosen, or button 802 is selected when detergent B is chosen by using operation unit 104 of data terminal 10. In the screen G5 shown in Fig. 20, only button 801 is shown as painted dark, for instance, among those buttons for detergent selection. This is to show that the detergent selected now is detergent A.

After the detergent setting screen is displayed in step S1003, determination is made as to whether or not operation of selecting any of the detergents is done, as shown in Fig. 10 (step S1004). At this time, when the user selects another button in the detergent setting display of screen G5 ("NO" in step S1004), the detergent selection display is changed (step S1005). When the user selects button 802, to be specific, in the changed detergent selection display of screen G5, button 801 is changed into the same display mode as the other detergents, and button 802 is turned into a dark-shaded display mode. When the user finds no detergent of his choice and selects button 803 corresponding to "None Available", button 803 is similarly turned into the dark-shaded display mode. In addition, the user selects button 804 when initializing the information on the user's own detergents stored in server 300.

After the above, the process is returned to the step S1004 in Fig. 10, and the same operation is repeated.

Next, when operation of selecting a detergent is not executed ("NO" in step S1004), determination is made as to whether or not operation of deciding a detergent is done (step S1006). If the operation of deciding a detergent is not done at this time ("NO" in step S1006), the operation is returned to the step 1004, and the processes are repeated until operation of deciding any of the detergents is made, while continuing display of the detergent setting screen and the process of accepting operation by the user.

When button 805 is selected in screen G5 of Fig. 20 ("YES" in step S1006), on the other hand, the setting operation of detergent in screen G5 ends. One of the detergents to be used is thus decided.

Next, data terminal 10 transmits information that specifies the selected detergent to server 300 (step S1007), and server 300 receives the information (step S1071).

Following the above, server 300 stores the received detergent information in a database related to setting of detergent and fabric softener for each user in storage unit 302 (step S1072), and transmits information relating to the selected detergent to be displayed on data terminal 10 (step S1073).

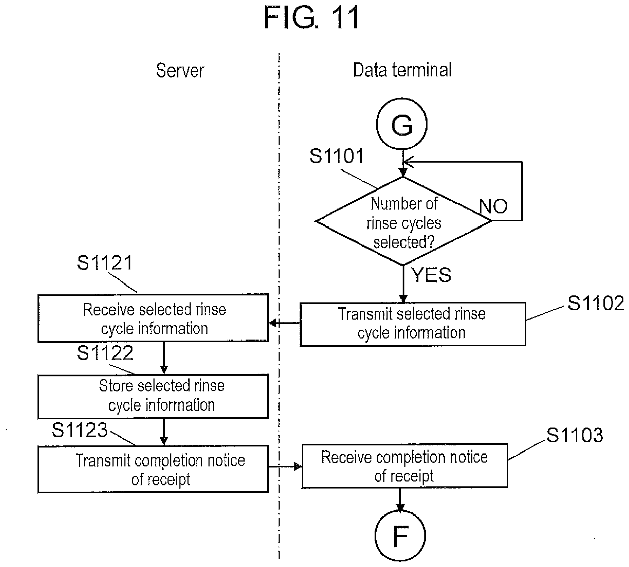

Next, data terminal 10 receives the information relating to the detergent transmitted from server 300 (step S1008), and data terminal 10 displays the received information as a selected detergent-related screen (step S1009). After that, the operation advances to the flow processes following step (G) of which description is given below by using Fig. 11.

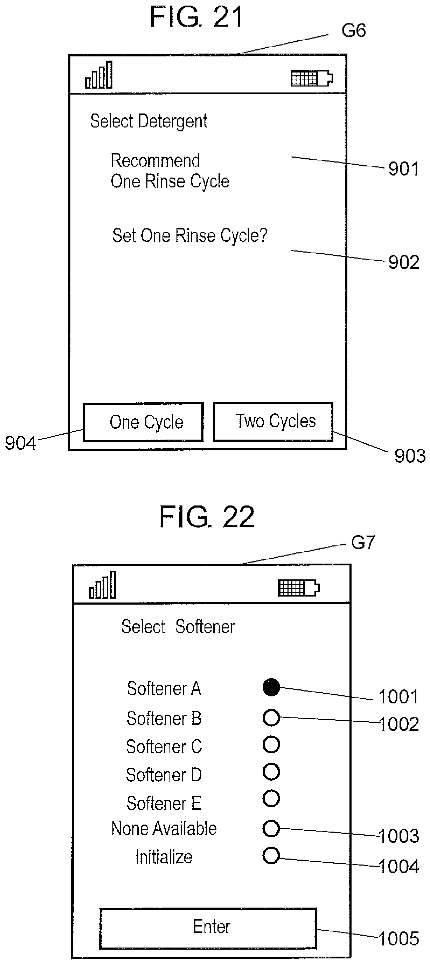

Here, one example of the screen relating to the detergent displayed on data terminal 10 is described by referring to Fig. 21.

Fig. 21 illustrates one example of the detergent-related screen displayed on the data terminal according to this exemplary embodiment of the present invention.

As shown in Fig. 21, screen G6 includes display 901, display 902, and the like. Display 901 indicates information that a number of rinse cycles recommended by the detergent manufacture is one, and the like. Display 902 indicates information that asks the user whether to set the number of rinse cycles to one according to the recommendation, or not. Screen G6 further includes button 904 for setting one rinse cycle, and button 903 for setting two cycles, as the buttons for the user to select the number of rinse cycles.

Description provided hereinafter with reference to Fig. 11 is the processes performed when the detergent selected by the user on screen G6 shown in Fig. 21 has a recommendation of one rinse cycle.

It is noted that the majority of detergents requires two cycles of rinse step in the normal washing operation. Washing machine 1 is therefore designed to repeat two cycles of the rinse step as the basic operation according to the majority of detergents for which two cycles of the rinse step is needed. When taking an example of the washing operation in Fig. 2, a portion indicating rinsing operation to be repeated for a number of times is carried out two times. On the other hand, any detergent for which only one rinse cycle is recommended is such a detergent that has a quick bubble-fading feature so that the cleaning solution left during the washing can be rinsed away easily by running only one rinse cycle. It is hence recommended that the number of rinse cycles to be repeated is set to one for the detergent with the recommendation of one rinse cycle.

In other words, a recommended number of rinse cycles is displayed for the user when the user selects any detergent of which recommendation is one rinse cycle. Accordingly, in step S1009 of Fig. 10, an instruction screen for the user to select the number of rinse cycles is provided as the information to be displayed on data terminal 10 in relation to the detergent, like the example of screen G6 in Fig. 21.

Next, after the screen G6 of Fig. 21 is displayed, determination is made as to whether or not a number of rinse cycles is selected (step S1101), as shown in Fig. 11. If no selection is made ("NO" in step S1101), the process is then held on standing-by until any number of rinse cycles is selected by the user.

On the other hand, when a number of rinse cycles is selected with data terminal 10 by the user ("YES" in step S1101), information on the selected number of rinse cycles is transmitted to server 300 (step S1102).

Server 300 then receives the information on the selected number of rinse cycles (step S1121). Subsequently, server 300 updates and stores the information on the number of rinse cycles in the setting database related to the detergent and the fabric softener of each user in storage unit 302 (step S1122).

Following the above, server 300 makes transmission to notify that reception of the information on number of rinse cycles is completed (step S1123).

Data terminal 10 thus receives the completion notification of reception of the number of rinse cycle information from server 300 (step S1103).

The process advances thereafter to step S707 in Fig. 7.

Description is provided hereinafter of processes performed when a change in setting of the fabric softener is accepted in step S803 of Fig. 8. Note that the flow of basic processes is skipped since it is similar to the setting flow of the detergent described in Fig. 10. Described here with Fig. 22 is an example of fabric-softener selection screen displayed on data terminal 10.

Fig. 22 illustrates one example of the fabric-softener selection screen displayed on the data terminal according to this embodiment of the invention.

That is, Fig. 22 is one example of the screen adapted to change setting of fabric softener by selecting any of the fabric softeners displayed on data terminal 10 after a setting change of the fabric softener shown in Fig. 8 is accepted ("YES" in step S803).

As shown in Fig. 22, there shows names of various brands of fabric softeners stored in server 300, buttons for selecting applicable fabric softener, and the like that are displayed on screen G7, in the like manner as screen G5 shown in Fig. 20 for detergents. Button 1001 is selected when fabric softener A is chosen, or button 1002 is selected when fabric softener B is chosen by using operation unit 104 of data terminal 10. In the screen G7 shown in Fig. 22, only button 1001 is shown as shaded dark among those buttons for selecting fabric softeners. This is to show that the fabric softener selected now is fabric softener A.

When the user selects another button in the fabric-softener selection display of screen G7, the fabric-softener selection display is changed. When the user selects button 1002, to be specific, in the changed fabric-softener selection display of screen G7, button 1001 is changed into the same display mode as the other fabric softeners, and button 1002 is turned into a dark-shaded display mode. When the user finds no fabric softener of his choice and selects button 1003 corresponding to "None Available", button 1003 is similarly turned into the dark-shaded display mode. In addition, the user selects button 1004 when initializing the information on the user's own fabric softeners stored in server 300.

When button 1005 is selected in screen G7 of Fig. 22, on the other hand, the setting operation of fabric softeners in screen G7 ends. One of the fabric softeners to be used is thus decided.

Referring to Fig. 9, description is provided hereinafter about processes of setting washing machine 1 with the detergent and the fabric softener and the number of rinse cycles determined in relation to the detergent according to the processes illustrated above. Here, the processes of Fig. 9 are executed when a command of transferring the settings related to the detergent and the fabric softener to washing machine 1 is accepted ("YES" in step S801) as shown in Fig. 8. That is, these are the processes after the button 704 is selected in screen G4 shown in Fig. 19.

First, data terminal 10 transmits to server 300 a request for generating a setting command that needs to be transmitted to washing machine 1 to execute the setting, as shown in Fig. 9 (step S901).

When server 300 receives the request for generating a setting command (step S911), server 300 generates a setting command (step S912). The setting command includes various parameters such as a factor of dispensing amount corresponding to the detergent of given brand selected by the user, a number of rinse cycles selected additionally and to be set as a result of the selection of the detergent, a factor of dispensing amount corresponding to the fabric softener of given brand selected by the user, and the like.

Next, the generated setting command is transmitted to data terminal 10 (step S913).

Data terminal 10 receives the setting command transmitted from server 300 (step S902). After that, data terminal 10 displays a communication guidance screen for instructing the user to bring data terminal 10 close to washing machine 1 so as to make communications possible (step S903).

Next, data terminal 10 transmits the setting command to washing machine 1 (step S904).

When washing machine 1 receives the setting command transmitted from data terminal 10 (step S941), it stores information contained in the setting command into storage unit 24 (step S942). At this time, the factor of dispensing amount of the detergent of given brand selected by the user is stored in detergent-amount display data storage section 24b. The number of rinse cycle setting selected additionally when the detergent is selected is stored in rinse-cycle setting storage section 24d. The factor of dispensing amount of the fabric softener of given brand selected by the user is stored in softener-amount display data storage section 24c.

Following the above, washing machine 1 makes transmission to data terminal 10 to notify that reception of the setting command have been completed (step S943).

Data terminal 10 receives the notification of reception completion of the setting command from washing machine 1 (step S905), and displays a screen informing the user that the setting is completed (step S906).

With the above processes, all the processes of setting washing machine 1 with the information related to the detergent and the fabric softener by the user are completed.

Although what has been described in this exemplary embodiment is an example, in which the storing process of the setting database related to the detergent and the fabric softener of each user into storage unit 302 is executed following the transmission from data terminal 10 to server 300 immediately after the user has selected the detergent and the fabric softener, or immediately after the user has selected the number of rinse cycles, this is not intended to be restrictive. For instance, the storing process may be carried out following the transmission from data terminal 10 to server 300 after the user has completed selection of the set detergent and the fabric softener, and then selected to make setting of them to washing machine 1. Alternatively, a flow of transmitting a notification that setting to washing machine 1 is completed from data terminal 10 to server 300 may be added, so that the storing process of the setting database related to the detergent and the fabric softener of each user into storage unit 302 can be executed after server 300 receives the notification of the completion of setting to washing machine 1. In this case, the setting of the detergent and the fabric softener can be updated by letting the user set them to washing machine 1. In this way, the setting of the detergent and the fabric softener of each user can become consistent between washing machine 1 and server 300.

Moreover, although description provided in this exemplary embodiment is an example, in which updating of information is performed on detergent-amount display data storage section 24b, softener-amount display data storage section 24c and rinse-cycle setting storage section 24d of washing machine 1 after the communication is made from data terminal 10 to washing machine 1, this is not intended to be restrictive. For instance, the configuration can be such that the user carries out updating by using operation unit 25 and display unit 26 of washing machine 1. This allows the user to bring the data of the detergent and the fabric softener back into the initial state at the time of shipment, such as two cycles of rinse step with no selection of detergent and fabric softener, even in a situation where when the use of data terminal 10 is difficult.

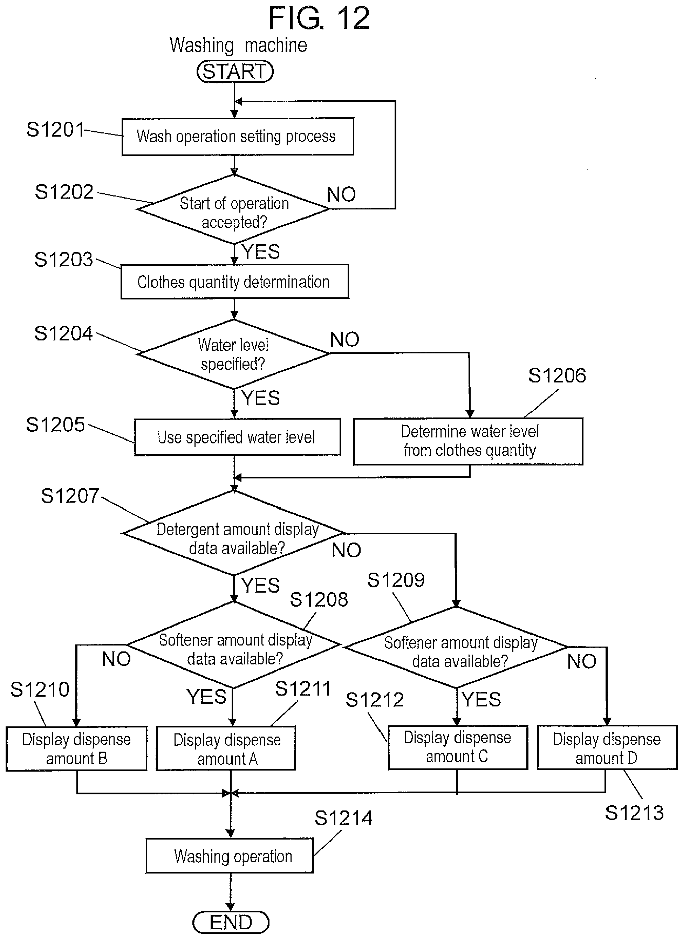

Referring to Fig. 12, description is provided hereinafter about the flow of processes when using the above-mentioned information relating to the detergent and the fabric softener set to washing machine 1 for the washing operation in the washing machine system of this exemplary embodiment.

First, the process begins when the user turns on a power supply to washing machine 1, as shown in Fig. 12.

Next, the user executes a process of setting the washing operation of washing machine 1 by using display unit 26 and operation unit 25 (step S1201). Specific examples of the setting relating to the washing operation include specification of a new program that alters the washing operation substantially, specification of a time to perform washing according to any of preset programs, specification of a number of rinse cycles, specification of a dewatering time, specification of using or skipping a drying step and drying time, specification of a water level to determine an amount of the water used for the washing, and the like.

Upon completion of the settings, determination is made next as to whether or not the start of operating washing machine 1 is accepted (step S1202). At this time, if the start of operating washing machine 1 is not accepted ("NO" in step S1202), the process is kept on stand-by until accepted.

On the other hand, when the start of operating washing machine 1 is directed through operation unit 25 ("YES" in step S1202), a step of determining a quantity of clothes in the washing drum is executed (step S1203). The operation of determining the quantity of clothes is carried out by controlling washing unit 21 via clothes-quantity detection section 23d in control unit 23 of washing machine 1.

Next, determination is made as to whether or not a water level is specified (step S1204) when the step of determining the quantity of clothes ends. At this time, if a water level has been specified by the user before the start of operation is accepted ("YES" in step S1204), the specified water level is assumed to be the water level set for the washing operation (step S1205).

On the other hand, if no water level has been specified ("NO" in step S1204), the water level is determined on the basis of the quantity of clothes disposed into washing machine 1, as determined in step S1203 (step S1206). In specific, the water level is lowered when the quantity of disposed clothes is small, and the water level is raised when the quantity is large. This process can reduce an amount of the water used to a lowest possible extent while ensuring the essential washing and rinsing performance.

Determination is made next as to whether information of an amount of detergent for a particular kind of detergent specified by the user is stored or not in detergent-amount display data storage section 24b (step S1207).

Next, in either cases wherein the information of an amount of detergent is stored ("YES" in step S1207) or not stored ("NO" in step S1207), determination is made as to whether information of an amount of fabric softener for the particular kind of fabric softener specified by the user is stored in softener-amount display data storage section 24c (step S1208 and step S1209).

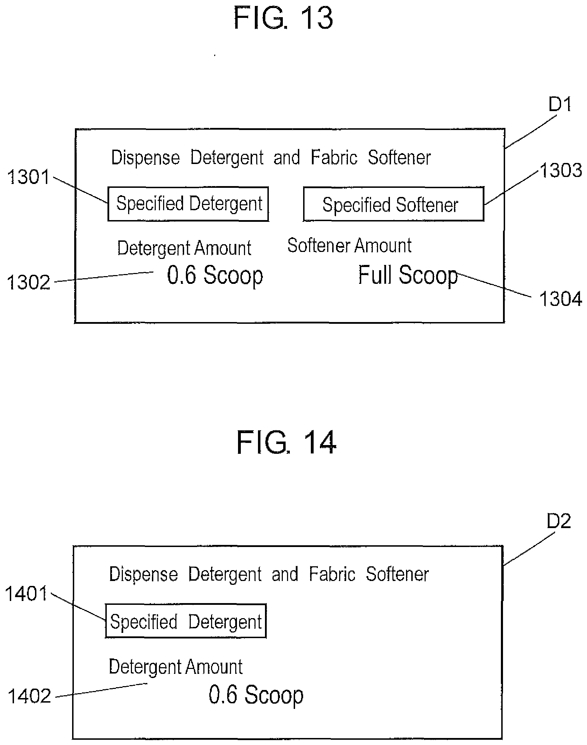

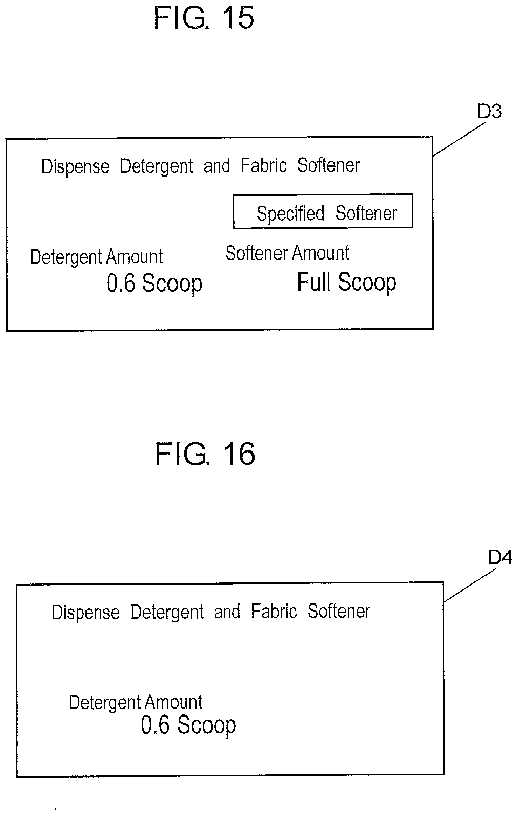

When both the information of an amount of the detergent and the information of an amount of the fabric softener are stored ("YES" in step S1207 and "YES" in step S1208), display content D1 that indicates dispensing amounts of the detergent and the fabric softener is displayed on display unit 26 of washing machine 1 (step S1211), as will be illustrated later in Fig. 13. If the information of an amount of fabric softener is not available whereas the information of an amount of detergent is stored ("YES" in step S1207 and "NO" in step S1208), display content D2, as illustrated later in Fig. 14, is then displayed on display unit 26 of washing machine 1 (step S1210). On the other hand, if the information of an amount of detergent is not available whereas the information of an amount of fabric softener is stored ("NO" in step S1207 and "YES" in step S1208), display content D3, as illustrated later in Fig. 15, is then displayed on display unit 26 of washing machine 1 (step S1212). Furthermore, if neither the information of an amount of detergent nor the information of an amount of fabric softener is stored ("NO" in step S1207 and "NO" in step S1208), display content D4, as illustrated later in Fig. 16, is then displayed on display unit 26 of washing machine 1 (step S1213).

After having displayed the information of the dispensing amounts of the detergent and the fabric softener for a predetermined time, a washing operation including washing and rinsing is executed (step S1214).

The washing operation comes to the end when all steps of the washing are completed.

Here, description is provided of the display showing the dispensing amounts of detergent and fabric softener in the above steps S1210 to S1213, by presenting concrete examples with reference to Fig. 13 through Fig. 16.

Fig. 13 through Fig. 16 are examples of the displays indicating dispensing amounts of detergent and fabric softener in the washing machine according to this exemplary embodiment of the present invention. The above displays of the dispensing amounts of detergent and fabric softener are presented on display unit 26 of washing machine 1.

Fig. 13 illustrates one example of display content D1 relating to step S1211 shown in Fig. 12. As shown in Fig. 13, display content D1 includes instructions 1301 through 1304. Instruction 1301 indicates "Specified Detergent" since it is specified by the user. Instruction 1302 indicates an amount of the detergent to be dispensed. Instruction 1303 indicates "Specified Softener" like the detergent since it is specified by the user. Instruction 1304 also indicates an amount of the fabric softener to be dispensed. In determining an amount of the detergent to be dispensed, first step is to calculate an amount of water used in the washing operation according to the water level setting as determined in any of step S1205 and step S1206 in Fig. 12, and obtain a ratio of the water to the standard amount of water. The amount of the detergent to be dispensed can be then obtained by multiplying the obtained ratio by the factor of detergent dispensing amount to the standard amount of water, shown in Fig. 4 for example, which is stored in detergent-amount display data storage section 24b. An amount of the fabric softener to be dispensed can also be obtained in the same manner as that for the amount of detergent.

Fig. 14 illustrates one example of display content D2 relating to step S1210 shown in Fig. 12. As shown in Fig. 14, display content D2 includes instructions 1401 and 1402. Instruction 1401 indicates "Specified Detergent" as instruction 1301 of Fig. 13 since it is specified by the user. Instruction 1402 indicates an amount of the detergent to be dispensed. Display content D2 does not include an amount of fabric softener and the like since the fabric softener is not specified by the user, and the use of fabric softener is not essential for washing.

Fig. 15 illustrates one example of display content D3 relating to step S1212 shown in Fig. 12. Although display content D3 shown in Fig. 15 does not specify any detergent, it indicates a dispensing amount of detergent that is generally valid for most of detergents since detergent is dispensed almost without exception in the regular washing. There is no indication, however, of any specific detergent that corresponds to instruction 1301 of Fig. 13. The instruction for the fabric softener is similar to that shown in the case of Fig. 13.

Fig. 16 illustrates one example of display content D4 relating to step S1213 shown in Fig. 12. Although display content D4 shown in Fig. 16 does not specify any detergent as in the example of Fig. 15, it indicates a dispensing amount of detergent that is generally valid for most of detergents since detergent is dispensed almost without exception in the regular washing. However, there is no indication of any specific detergent that corresponds to instruction 1301 of Fig. 13. There is also no indication about a dispensing amount of fabric softener, as in the case of the instruction in Fig. 14.

Referring to Fig. 27A through Fig. 29, description is provided hereinafter of operation preprogramming setting and operation preprogramming task of the washing machine system according to this exemplary embodiment.

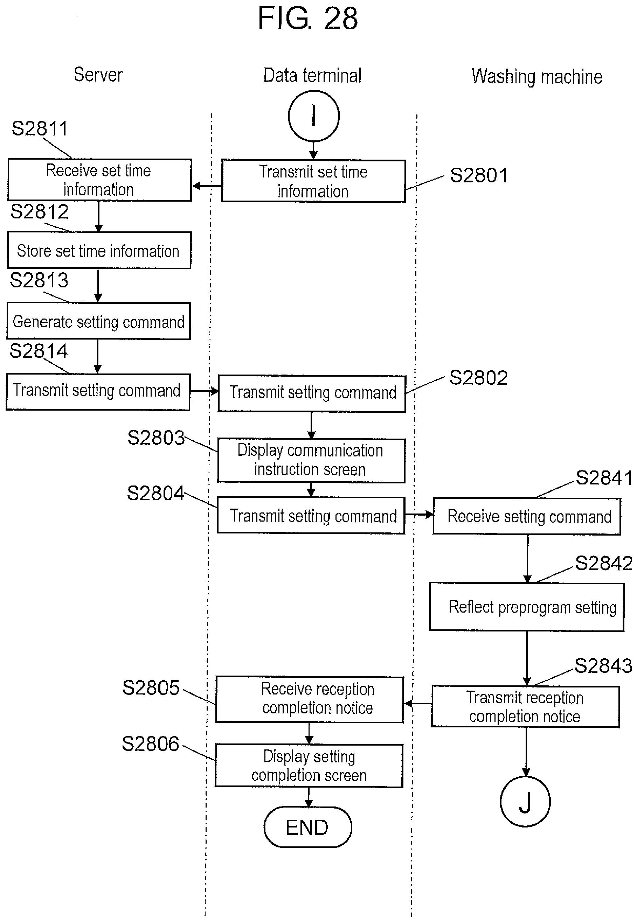

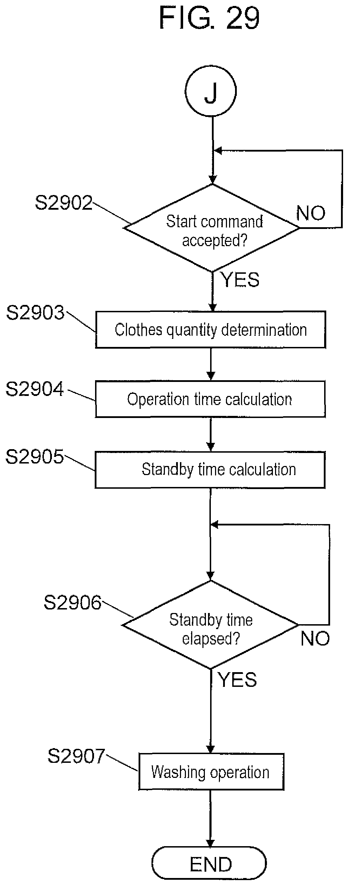

Fig. 27A, Fig. 27B and Fig. 28 are flow charts of the operation preprogramming setting in the washing machine system according to this exemplary embodiment of the present invention. Fig. 29 is a flow chart of the operation preprogramming task of the same washing machine system.

The flow processes following step (H) in Fig. 27A are the steps executed when a direction of operation preprogramming is received from the menu screen on information of terminal 10 in step S709 of Fig. 7 ("YES" in step S709).

First, a request of a screen for selecting an operation course to be executed by washing machine 1 is transmitted from data terminal 10 to server 300 (step S2701), as shown in Fig. 27A.

Server 300 receives the transmitted request for the above-stated operation-course selection screen (step S2721). Server 300 then generates course selection screen information for selecting operation courses that are executable with the preprogrammed operation of washing machine 1 (step S2722), and transmits the generated course selection screen information to data terminal 10 (step S2723).

Data terminal 10 receives the course selection screen information transmitted from server 300 (step S2702), and displays a course selection screen thereafter (step S2703).

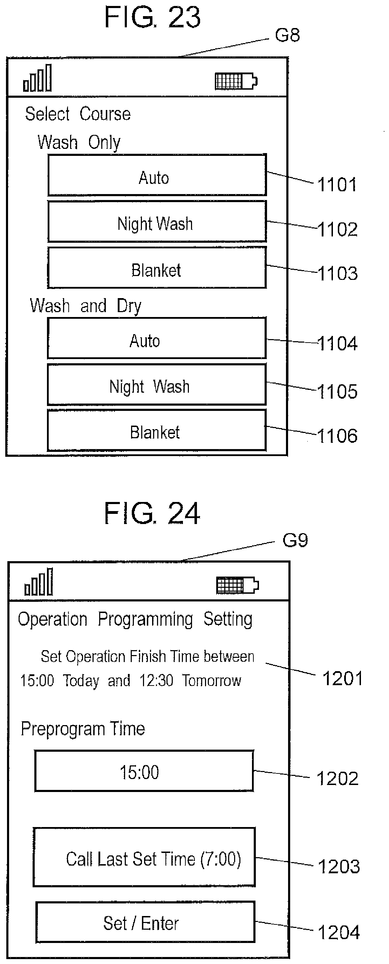

One example of the course selection screen displayed on data terminal 10 is described now by referring to Fig. 23.

Fig. 23 illustrates one example of course selection screen displayed on the data terminal according to this exemplary embodiment of the present invention. That is, Fig. 23 is an example of the course selection screen displayed on data terminal 10 according to the course-selection screen information generated by server 300.

As shown in Fig. 23, the course selection screen displays a wash-only course that performs washing, rinsing and dewatering, and a wash-and-dry course that performs a drying operation continuously following the washing step, when classified broadly. There are three buttons 1101, 1102 and 1103 under the wash only course for further selection of course programs. There are also three buttons 1104, 1105 and 1106 under the wash-and-dry course for further selection of course programs. In this example, the user can select any of the course programs by selecting one of the above buttons through operation unit 104 of data terminal 10.

Here, the course programs can be selected by the user to make significant modifications in the operation cycles of washing machine 1 according to his purpose of use. The night course of button 1102, for instance, is a course program selected when running the washing operation in the nighttime. To be specific, it is the course program in which a dewatering time is extended while the motor speed is reduced in the spin-dry operation. This can reduce a noise level in the spin-dry operation while maintaining a dewatering effect on the wet clothes soaked during the rinsing. The blanket course of button 1103 is a course program when washing a large piece of laundry. Specifically, this wash course performs rinsing at a high water level, and extends a time taken to increase a rotation speed for the spin-dry operation. This improves the rinse performance, and reduces unbalancing during the spin-dry operation.

Accordingly, there are variations in time periods required for washing operations among the individual operation courses, since the operation cycles of washing machine 1 change substantially. In particular, the dry cycle requires especially a long running time as compared with the time necessary from the wash cycle to the dewatering cycle.

The course selection screen displayed on data terminal 10 in the washing machine system of this exemplary embodiment is configured as described above.

Next, after the course selection screen is displayed, determined is made as to whether or not a course selection is done on the course selection screen (step S2704) as shown in Fig. 27A. At this time, the process is kept on stand-by until any of the course programs is selected, if the selection is not done ("No" in step S2704).

On the other hand, when one of the course programs is selected in the course selection screen displayed on data terminal 10 ("YES" in step S2704), data terminal 10 transmits information of the selected course program to server 300 (step S2705).

Server 300 thus receives the information of the selected course program from data terminal 10 (step S2751). Server 300 then generates timeframe information for operation preprogramming setting (step S2752). In this instance, the operation preprogramming is for setting a time at which the operation is finished. The washing operation is deferred until an operation start time, which is obtained by subtracting an operation time necessary for the individual course from the specified operation finish time, and the washing operation is started from the operation start time. In this case, the operation finish time cannot be set within a time period that begins from the current time, and that is equal to the operation time necessary for the individual course. Therefore, for each of the individual courses having a different operation time, the start time is set after calculating a time period, in which the operation finish time cannot be set, according to the operation time of the each individual course and information of the current time managed by time management section 303c of server 300.

Next, server 300 makes control unit 303 retrieve the preprogrammed operation finish time set last time to the pertinent washing machine by the pertinent user, from the user information database stored in user information storage section 302a (step S2753), as shown in Fig. 27A.

Next, server 300 makes screen information generation section 303a generate information of operation-preprogramming setting screen on the basis of a settable timeframe information generated and the last set time information retrieved (step S2754).

Next, server 300 transmits the generated information of operation-preprogramming setting screen to data terminal 10 (step S2755).

Data terminal 10 thus receives the information of operation-preprogramming setting screen transmitted from server 300 (step S2706). After that, data terminal 10 displays the operation-preprogramming setting screen (step S2707).

Referring to Fig. 24, description is provided here about one example of the operation-preprogramming setting screen displayed on data terminal 10 in step S2707 of Fig. 27A.

Fig. 24 illustrates one example of the operation-preprogramming setting screen displayed on the data terminal according to this exemplary embodiment of the present invention.

As shown in Fig. 24, screen G9 includes display 1201, buttons 1202, 1203 and 1204, and the like. Display 1201 indicates the settable timeframe information generated in step S2752 of Fig. 27A. Button 1202 is a button for specifying an operation finish time. Button 1203 is a button for setting the last preprogrammed operation finish time retrieved in step S2753 of Fig. 27A as a preprogrammed time for this preprogramming operation. Button 1204 is a button for entering the operation preprogramming setting.

Here, button 1202 shows a provisionally selected preprogrammed time, immediately after screen G9 is displayed. In the case where the preprogrammed time is changed with button 1202, or the preprogrammed time set for this operation is changed to the provisionally selected preprogrammed operation finish time with button 1203, the provisionally selected preprogrammed time on button 1202 is also changed according to the change. The provisionally selected preprogrammed time is entered by selecting button 1204.

The operation-preprogramming setting screen displayed on data terminal 10 of the washing machine system of this exemplary embodiment is configured as described above.

Next, after the operation-preprogramming setting screen is displayed (step S2707) as shown in Fig. 27A, determination is made as to whether or not to call up the last preprogrammed operation finish time (step S2708), as shown in Fig. 27B. At this time, when the last preprogrammed operation finish time is called and set it as a preprogrammed time for this preprogramming operation ("YES" in step S2708), determination is further made as to whether it is within a range of settable timeframe or not (step S2709). This step corresponds to the operation of selecting button 1203 in Fig. 24.

And, when the last preprogrammed operation finish time is within the range of settable timeframe generated in step S2753 shown in Fig. 27A ("YES" in step S2709), the provisionally set preprogrammed time is changed to the last preprogrammed operation finish time (step S2710).

If, on the other hand, the last preprogrammed operation finish time is outside of the range of settable timeframe ("NO" in step S2709), a screen of cautionary message that it is beyond the limits of the settable timeframe is displayed by annunciator unit 103 of data terminal 10(step S2711).

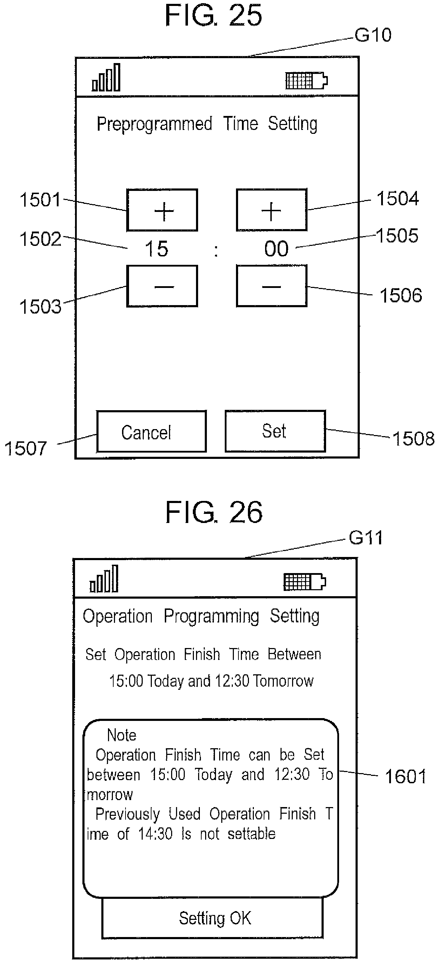

Description is provided here of an example of the cautionary message screen displayed on data terminal 10 in step S2711 of Fig. 27B, by referring to Fig. 26.

Fig. 26 illustrates one example of the cautionary message screen displayed on the data terminal according to this exemplary embodiment of the present invention.

As shown in Fig. 26, the user is presented with a cautionary message by showing screen G11 in which text display 1601 of the cautionary message is superimposed over a display similar to screen G9 of Fig. 24. This is to advise the user that the time being set is outside the limits of settable timeframe, and to let the user change it.

Once the cautionary message is displayed, the process returns to step S2708 after a lapse of a predetermined time for continuation of the operating process on the setting screen of preprogramming operation, and the same processes are continued.

On the other hand, if selection of the last preprogrammed time is not made ("NO" in step S2708), then, determination is made as to whether or not a change of the provisionally selected time is directed (step S2712). When a change of the time is directed ("YES" in step S2712), a process of changing the setting time is executed at this time (step S2713). This step corresponds to the operation of selecting button 1202 in Fig. 24. Specifically, the setting time is changed by operation on the screen displayed for changing the preprogrammed time by using annunciator unit 103 and operation unit 104 of data terminal 10.

Description is provided here of an example of preprogrammed time setting screen displayed on data terminal 10 in step S2713 of Fig. 27B, by referring to Fig. 25.

Fig. 25 illustrates one example of the preprogrammed time setting screen displayed on the data terminal according to this exemplary embodiment of the present invention.

As shown in Fig. 25, screen G10 displays the provisionally selected time with display 1502 corresponding to hours and display 1505 corresponding to minutes. Screen G10 also includes buttons 1501 and 1503 that increases and decreases the number of hours of preprogrammed time shown in display 1502 respectively, and buttons 1504 and 1506 that increases and decreases the number of minutes of the preprogrammed time shown in display 1505 respectively. Also disposed on screen G10 are button 1507 used to cancel the time set as a result of the operation, and button 1508 to reflect the set time. When button 1507 is selected in this instance, the change made on the preprogrammed time with buttons 1501, 1503, 1504 and 1506 is canceled, and the display is reset to the initial operation preprogramming setting screen. When button 1508 is selected, on the other hand, the preprogrammed time shown in displays 1502 and 1505 is reflected by taking place of the provisionally selected preprogrammed time on the operation preprogramming setting screen, and this returns the operation preprogramming setting screen.

The preprogrammed time setting screen of data terminal 10 in the washing machine system of this exemplary embodiment is configured as described above.

Next, when any change of the set time is not directed ("NO" in step S2712), then, determination is made as to whether or not a direction is given to execute an operation preprogramming setting (step S2714), as shown in Fig. 27B. If there is no direction of executing the operation preprogramming setting ("NO" in step S2714), the process is returned to step S2708, and subsequent operation processing on the operation preprogramming setting screen is continued.

On the other hand, when there is a direction of executing the operation preprogramming setting ("YES" in step S2714), the flow advances to execute the processes following the step (I) shown in Fig. 28.

Next, data terminal 10 transmits to server 300, time information of the preprogrammed operation set on the operation preprogramming setting screen, as shown in Fig. 28 (step S2801).

Thus, server 300 receives the time information of the preprogrammed operation transmitted from data terminal 10 (step S2811). Afterwards, server 300 stores the time information of the preprogrammed operation by revising the previously set time information such as the last preprogrammed operation finish time among the information identified by the pertinent user and the pertinent washing machine in the user information database stored in user information storage section 302a (step S2812). It is hence possible to use the time information set this time as a previously set time when making an operation preprogramming setting in the next time.

After having stored the set time information, server 300 makes command generation section 303b generate a setting command for executing operation preprogramming setting with washing machine 1 (step S2813). In this case, the setting command includes at least information that specifies the selected course received in step S2721 and information that specifies a number of minutes from the present time when operation of the selected course is to be finished. Note that the information on the number of minutes from now to the finish time of operation can to be calculated as a difference between the set time of finishing operation as received in step S2811 of Fig. 28 and the current time managed by time management section 303c of server 300.

Next, the generated setting command for operation preprogramming setting is transmitted to data terminal 10 (step S2814).

Data terminal 10 thus receives the setting command for operation preprogramming setting (step S2802). After that, data terminal 10 displays a screen that directs the user to bring data terminal 10 close to washing machine 1 so as to make communications possible between them (step S2803). Subsequently, data terminal 10 transmits the setting command to washing machine 1 (step S2804).

Washing machine 1 then receives the setting command transmitted from data terminal 10 (step S2841). Afterwards, a setting content directed by the setting command is reflected in the setting of washing machine 1, and is notified to the user on display unit 26 (step S2842). The display shows at this time that the selected course has been changed to the course directed by the setting command, and the operation preprogramming setting has been completed.

Next, transmission is executed to data terminal 10 to notify that reception of the setting command has been completed (step S2843). Note that the flow of processes following the step (J) in Fig. 29 about how to carry out the preprogramming operation after setting the preprogramming operation with washing machine 1 will be described in a later part.

Data terminal 10 thus receives completion notification of reception of the command from washing machine 1 (step S2805). Thereafter, data terminal 10 displays a screen that notifies the user that the setting has been completed (step S2806). This completes the flow processes of setting up washing machine 1 with the setting information of operation preprogramming by the user.

Description is provided hereinafter of the preprogrammed operation of washing machine 1 of this exemplary embodiment by referring to Fig. 29.

The actual preprogrammed operation does not start at the time of step S2842 though the preprogramming setting has been reflected in washing machine 1 in step S2842 of Fig. 28. In other words, the preprogrammed operation is not executed unless a start command of operation is accepted in step S2902 of Fig. 29.

Here, description is provided more concretely about the preprogrammed operation of washing machine 1 by referring to Fig. 29.

First, determination is made as to whether or not a start command of operation is accepted (step S2902), as shown in Fig. 29. If a start command is not accepted at this time ("NO" in step S2902), this step is held on stand-by until accepted.

When operation unit 25 of washing machine 1 is operated by the user, and a start command of the preprogrammed operation is accepted, on the other hand ("YES" in step S2902), the step of determining a quantity of clothes is executed (step S2903). This determining operation of the quantity of clothes is executed by controlling washing unit 21 with clothes-quantity detection section 23d of control unit 23 in washing machine 1.

Next, operation preprogramming control section 23e of washing machine 1 calculates an operation time to execute operation of an optimum course corresponding to the quantity of clothes according to the determination result of the quantity of clothes (step S2904). Operation of the optimum course corresponding to the quantity of clothes includes such examples as increasing a washing time to ensure washing effectiveness, increasing an amount of water used, which takes a longer time to feed and drain the water, causing a longer time to dry clothes that are reflected when the quantity of clothes is large.

Next, operation preprogramming control section 23e of washing machine 1 calculates a time necessary to stay standing by (step S2905). To be specific, the operation time of the course calculated in step S2904 of Fig. 29 is subtracted from the setting time to finish the course after the operation for a given number of minutes specified by the setting command received in step S2841 of Fig. 28. The time to stay standing by until the timing to start the washing operation can be thus calculated.

Next, operation preprogramming control section 23e of washing machine 1 determines whether the calculated stand-by time has elapsed or not (step S2906). If the stand-by time has not elapsed ("NO" in step S2906), this determination is repeated until a lapse of the stand-by time.

When the stand-by time is elapsed, on the other hand ("YES" in step S2906), washing machine 1 executes the washing operation (step S2907).

That concludes the preprogrammed operation of washing machine 1.

In this exemplary embodiment, there is a case that a time lag occurs from the time that the user has specified, up to an extent of time that is needed after the process of conversion into the time information in step S2813 of Fig. 28 until reception of the start command of the preprogrammed operation in step S2902 of Fig. 29. It is feasible to cope with this matter, however, by taking measures separately against each of the time that is taken until transmission of the setting command from server 300 to washing machine 1 via data terminal 10, and the time that is taken from reception by washing machine 1 of the setting command until reception of the start command of the preprogrammed operation in step S2902 of Fig. 29.

First, a major part of the time taken for transmission of the command from server 300 to washing machine 1 is spent by the user to bring data terminal 10 close to washing machine 1 when establishing communication from data terminal 10 to washing machine 1. Therefore, a time-out procedure is set to apply when a lapse of time exceeding a predetermined period is detected for the transmission of the setting command in step S2804 of Fig. 28. This can avoid the time lag by a great extent.

On the other hand, a major part of the time taken from the reception by washing machine 1 of the command until the reception of the start command of the preprogrammed operation is spent by repeating the determination in step S2902 of Fig. 29 in the absence of a direction by the user to start the operation. Another time-out procedure is therefore set to apply when a lapse of time exceeding a predetermined period is detected for the determination in step S2902 of Fig. 29. This can also avoid the time lag by a large extent. Alternatively, the time spent for repeating the determination in step S2902 of Fig. 29 may be measured with a timer in control unit 23, so that the setting time to finish the operation is corrected for a number of minutes. This method can also avoid the time lag by a large extent.

When the time-out procedure is applied, the preprogrammed operation of washing machine 1 will not be executed. If this is the case, the preprogrammed operation of washing machine 1 may be executed by repeating the setting operation again with the data terminal.

By virtue of the above configuration and operation sequence described in this exemplary embodiment, the washing machine system of the present invention can allow the user to achieve the preprogrammed operation by simple and comprehensible operation of specifying the time to finish the operation, without providing washing machine 1 with a clock function.

In this exemplary embodiment, though the description is given of the example in which the communications between data terminal 10 and washing machine 1 are carried out by NFC through the loop antennas, this does not mean to be restrictive. The communications between data terminal 10 and washing machine 1 can be made by any other method having capability of communicating among plural number of terminals, such as wireless LAN, or Wi-Fi for example. The communications can also be made between data terminal 10 and washing machine 1 by using one-to-one communication method such as infrared communications.

In addition, the communication of data terminal 10 to establish connection to network 200 can be made by wireless LAN such as Wi-Fi.

As described above, the present invention discloses the washing machine system comprising a washing machine and a washing-machine information server that can communicate with each other through a communications network. The washing-machine information server comprises a time management section that keeps a clock running to show the current time, a command generation section that generates a command of various settings to be transmitted to the washing machine, a screen information generation section that generates screen information used for setting operation of the washing machine, and a communication unit that communicates through the communications network. The washing machine comprises an operation preprogramming control section that controls preprogrammed operation of washing tasks, and a communication unit that communicates through the communications network. Furthermore, the screen information generation section generates screen information for operation programming setting used to specify and set a time of the preprogrammed operation, and the command generation section compares the set time specified according to the screen information for operation programming setting with the current time of the running clock in the time management section to obtain a difference from the current time, and generates an operation preprogramming command containing information of the difference converted into time information. The operation preprogramming command is transmitted to the washing machine via the communication unit of the washing machine information server and the communication unit of the washing machine. The operation preprogramming control section of the washing machine is configured to perform the operation preprogramming task based on the time information of the difference from the current time in the operation preprogramming command.

It thus becomes possible to allow the user to make operation programming setting by specifying time by using the clock function of the washing machine information server even though the washing machine itself has no clock function.

Moreover, the washing machine system includes a data terminal having capability of communication through the communications network, according to of the present invention. The data terminal comprises an annunciator unit that displays an operation preprogramming setting screen generated by the screen information generation section of the washing machine information server, an operation unit that executes and operation preprogramming setting based on the operation preprogramming setting screen displayed on the annunciator unit, a first communication unit that communicates with the washing machine via the communication unit of the washing machine, and a second communication unit that communicates with the washing machine information server via the communication unit of the washing machine information server. The data terminal may be so configured that the second communication unit receives information of the operation preprogramming setting screen from the washing machine information server, and transmits information of the operation preprogramming time selected by the operation unit to the washing machine information server, and the first communication unit transmits an operation preprogramming command to the washing machine after the second communication unit receives the operation preprogramming command from the washing machine information server.

It becomes possible by the above configuration to achieve exchange of the information between the washing machine information server and the washing machine without making direct communications between them. In addition, the above configuration allows the user to make operation preprogramming setting more simply and comprehensibly by taking advantage of the operation preprogramming setting screen carrying a larger amount of information displayed on the annunciator unit of the data terminal.

Furthermore, according to the washing machine system of the present invention, the washing machine information server is provided with a user-information storage section that stores time information including the previously set preprogrammed operation for each individual user. Thus, it can be configured such that the time information on the previously set preprogrammed operation is made available to use by adding the time information when generating information of the operation preprogramming setting screen.

This can help the user set more simply the preprogrammed operation time that he uses frequently.

### INDUSTRIAL APPLICABILITY

The washing machine system of the present invention is configured to allow operation setting of a washing machine with an external device through the communications network, and it thereby enables the operation setting by specifying a finish time of washing operation especially for the washing machine not provided with a clock function. The invention is therefore applicable to various cleaning apparatuses such as dish-washing and drying systems besides the washing machine system.

### REFERENCE MARKS IN THE DRAWINGS

1 washing machine
10 data terminal
21 washing unit (washing, rinsing, dewatering, and drying unit)
22 communication unit
23 control unit
23a step management section
23b water level determination section
23c response content determination section
23d clothes-quantity detection section
23e operation preprogramming control section
24 storage unit
24a washing-machine specific information storage section
24b detergent-amount display data storage section
24c softener-amount display data storage section
24d rinse-cycle setting storage section
25 operation unit
26 display unit
27 loop antenna
101 first communication unit
102 second communication unit
103 annunciator unit
104 operation unit
105 control unit
105a display control section
105b first communication control section
105c second communication control section
106 loop antenna
200 network
300 server (washing machine information server)
301 communication unit
302 storage unit
302a user-information storage section
303 control unit
303a screen information generation section
303b command generation section
303c time management section
501 product name
502 eco-information display button
503 support information display button
504 operation preprogramming button
505 setting display button
701,703, 704, 801, 802, 803, 804, 805, 903, 904, 1001, 1002, 1003, 1004, 1005, 1101, 1102, 1103, 1104, 1105, 1106, 1202, 1203, 1204, 1501, 1503, 1504, 1506, 1507 and 1508 button
702, 901, 902, 1201, 1301, 1302, 1303, 1304, 1401, 1402, 1502, 1505, 1601 display

## Claims

1. A washing machine system comprising a washing machine (1) and a washing machine information server (300) that can communicate with each other through a communications network (200),
wherein the washing machine information server (300) comprises:
a time management section (303c) configured to keep a clock running to indicate a current time of day;
a command generation section (303b) configured to generate a command of various settings to be transmitted to the washing machine (1);
a screen information generation section (303a) configured to generate screen information used for setting operation of the washing machine (1); and
a communication unit (301) configured to communicate through the communications network (200),
wherein the washing machine (1) comprises:
an operation preprogramming control section (23e) configured to control an operation preprogramming task of washing; and
a communication unit (22) configured to communicate through the communications network (200),
wherein:
the screen information generation section (303a) is configured to generate information of an operation preprogramming setting screen for specifying and setting a time of preprogrammed operation; and
the command generation section (303b) is arranged to compare the set time specified according to the information of operation preprogramming setting screen with the current time of the clock in the time management section (303c) to obtain a difference from the current time; **characterized in that**
the command generation section (303b) is arranged to generate an operation preprogramming command containing information of the difference converted into time information;
the operation preprogramming command is transmitted to the washing machine (1) via the communication unit (301) of the washing machine information server (300) and the communication unit (22) of the washing machine (1); and
the operation preprogramming control section (23e) of the washing machine (1) is configured to perform the operation preprogramming task based on the time information of the difference from the current time in the operation preprogramming command.

2. The washing machine system of claim 1 further comprising a data terminal (10) capable of communicating through the communications network (200),
wherein the data terminal (10) comprises:
an annunciator unit (103) configured to display the operation preprogramming setting screen generated by the screen information generation section (303a) of the washing machine information server (300);
an operation unit (104) configured to execute an operation preprogramming setting based on the operation preprogramming setting screen displayed on the annunciator unit (103);
a first communication unit (101) configured to communicate with the washing machine (1) through the communication unit (22) of the washing machine (1); and
a second communication unit (102) configured to communicate with the washing machine information server (300) through the communication unit (301) of the washing machine information server (300),
wherein the data terminal (10) is configured to make:
the second communication unit (102) receive the information of operation preprogramming setting screen from the washing machine information server (300), and transmit information of operation preprogramming time selected by the operation unit (104) to the washing machine information server (300); and
the first communication unit (100) transmit the operation preprogramming command to the washing machine (1) after the second communication unit (102) receives the operation preprogramming command from the washing machine information server (300).

3. The washing machine system claim 1 or claim 2, wherein:
the washing machine information server (300) further comprises a user information storage section (302a) for storing time information of preprogrammed operation that is set last time for each individual user, and
the washing machine information server (300) is arranged to add the time information of preprogrammed operation set last time to the user information storage section (302a) when generating the information of operation preprogramming setting screen, and to render the time information reusable.

## Patentansprüche

1. Waschmaschinensystem, das eine Waschmaschine (1) und einen Waschmaschinen-Datenserver (300), die durch ein Kommunikationsnetz (200) miteinander kommunizieren können, umfasst,
wobei der Waschmaschinen-Datenserver (300) Folgendes umfasst:
einen Zeitmanagementblock (303c), der konfiguriert ist, eine Uhr laufen zu lassen, um eine aktuelle Tageszeit anzuzeigen;
einen Befehlserzeugungsblock (303b), der konfiguriert ist, einen Befehl aus verschiedenen Einstellungen zu erzeugen, die an die Waschmaschine (1) übertragen werden sollen;
einen Block (303a) zum Erzeugen von Bildschirminformationen, der konfiguriert ist, Bildschirminformationen zu erzeugen, die zum Einstellen eines Betriebs der Waschmaschine (1) verwendet werden; und
eine Kommunikationseinheit (301), die konfiguriert ist, durch das Kommunikationsnetz (200) zu kommunizieren,
wobei die Waschmaschine (1) Folgendes umfasst:
einen Block (23e) zum Steuern der Betriebsvorprogrammierung, der konfiguriert ist, eine Betriebsvorprogrammierungsfunktion zum Waschen zu steuern; und
eine Kommunikationseinheit (22), die konfiguriert ist, durch das Kommunikationsnetz (200) zu kommunizieren,
wobei:
der Block (303a) zum Erzeugen von Bildschirminformationen konfiguriert ist, Informationen eines Einstellbildschirms für die Betriebsvorprogrammierung zu erzeugen, um eine Zeit eines vorprogrammierten Betriebs zu definieren und einzustellen; und
der Befehlserzeugungsblock (303b) ausgelegt ist, die eingestellte Zeit, die in Übereinstimmung mit den Informationen des Einstellbildschirms für die Betriebsvorprogrammierung definiert wurde, mit der aktuellen Zeit der Uhr in dem Zeitmanagementblock (303c) zu vergleichen, um einen Unterschied zu der aktuellen Zeit zu erhalten; **dadurch gekennzeichnet, dass**
der Befehlserzeugungsblock (303b) ausgelegt ist, einen Betriebsvorprogrammierungsbefehl zu erzeugen, der Informationen über den Unterschied enthält, die in Zeitinformationen umgesetzt wurden;
der Betriebsvorprogrammierungsbefehl über die Kommunikationseinheit (301) des Waschmaschinen-Datenservers (300) und die Kommunikationseinheit (22) der Waschmaschine (1) an die Waschmaschine (1) übertragen wird; und
der Block (23e) zum Steuern der Betriebsvorprogrammierung der Waschmaschine (1) so konfiguriert ist, dass er die Betriebsvorprogrammierungsfunktion auf der Basis der Zeitinformationen des Unterschieds zu der aktuellen Zeit in dem Betriebsvorprogrammierungsbefehl ausführt.

2. Waschmaschinensystem nach Anspruch 1, das ferner einen Datenanschluss (10) umfasst, der durch das Kommunikationsnetz (200) kommunizieren kann,
wobei der Datenanschluss (10) Folgendes umfasst:
eine Meldeeinheit (103), die konfiguriert ist, den Einstellbildschirm für die Betriebsvorprogrammierung, der durch den Block (303a) zum Erzeugen von Bildschirminformationen des Waschmaschinen-Datenservers (300) erzeugt wurde, anzuzeigen;
eine Betriebseinheit (104), die konfiguriert ist, eine Betriebsvorprogrammierungseinstellung auf der Basis des Einstellbildschirms für die Betriebsvorprogrammierung, der auf der Meldeeinheit (103) angezeigt wird, auszuführen;
eine erste Kommunikationseinheit (101), die konfiguriert ist, durch die Kommunikationseinheit (22) der Waschmaschine (1) mit der Waschmaschine (1) zu kommunizieren; und
eine zweite Kommunikationseinheit (102), die konfiguriert ist, durch die Kommunikationseinheit (301) des Waschmaschinen-Datenservers (300) mit dem Waschmaschinen-Datenserver (300) zu kommunizieren,
wobei der Datenanschluss (10) konfiguriert ist, dafür zu sorgen, dass:
die zweite Kommunikationseinheit (102) die Informationen des Einstellbildschirms für die Betriebsvorprogrammierung von dem Waschmaschinen-Datenserver (300) erhält und Informationen über eine Betriebsvorprogrammierungszeit, die durch die Betriebseinheit (104) ausgewählt wurde, an den Waschmaschinen-Datenserver (300) überträgt; und
die erste Kommunikationseinheit (100) den Betriebsvorprogrammierungsbefehl an die Waschmaschine (1) überträgt, nachdem die zweite Kommunikationseinheit (102) den Betriebsvorprogrammierungsbefehl von dem Waschmaschinen-Datenserver (300) erhalten hat.

3. Waschmaschinensystem nach Anspruch 1 oder Anspruch 2, wobei:
der Waschmaschinen-Datenserver (300) ferner einen Benutzerinformationen-Speicherblock (302a) zum Speichern von Zeitinformationen eines vorprogrammierten Betriebs, der zuletzt eingestellt wurde, für jeden einzelnen Benutzer umfasst, und
der Waschmaschinen-Datenserver (300) ausgelegt ist, die Zeitinformationen des vorprogrammierten Betriebs, der zuletzt eingestellt wurde, zu dem Benutzerinformationen-Speicherblock (302a) hinzuzufügen, wenn die Informationen des Einstellbildschirms für die Betriebsvorprogrammierung erzeugt werden, und dafür zu sorgen, dass die Zeitinformationen wiederverwendbar sind.

## Revendications

1. Système de machine à laver comprenant une machine à laver (1) et un serveur d'information de machine à laver (300) qui peuvent communiquer l'un avec l'autre par le biais d'un réseau de communication (200),
dans lequel le serveur d'information de machine à laver (300) comprend :
une section de gestion de l'heure (303c) conçue pour laisser l'horloge tourner pour indiquer une heure actuelle du jour ;
une section de génération d'ordre (303b) conçue pour générer un ordre de différents paramètres à transmettre à la machine à laver (1) ;
une section de génération d'informations d'écran (303a) conçue pour générer des informations d'écran utilisées pour paramétrer le fonctionnement de la machine à laver (1) ; et
une unité de communication (301) conçue pour communiquer par le biais du réseau de communication (200),
la machine à laver (1) comprenant :
une section de commande pré-programmation de fonctionnement (23e) conçue pour commander une tâche de pré-programmation de fonctionnement de lavage ; et
une unité de communication (22) conçue pour communiquer par l'intermédiaire du réseau de communication (200),
la section de génération d'informations d'écran (303a) étant conçue pour générer des informations d'un écran de paramétrage de pré-programmation de fonctionnement destinées à spécifier et paramétrer une heure de fonctionnement pré-programmé ; et
la section de génération d'ordre (303b) étant conçue pour comparer l'heure paramétrée spécifiée en fonction des informations d'écran de paramétrage de pré-programmation de fonctionnement à l'heure actuelle de l'horloge dans la section de gestion de l'heure (303c) pour obtenir une différence par rapport à l'heure actuelle ; **caractérisé en ce que**
la section de génération d'ordre (303b) est conçue pour générer un ordre de pré-programmation de fonctionnement contenant des informations sur la différence convertie en informations de l'heure ;
l'ordre de pré-programmation de fonctionnement est transmis à la machine à laver (1) par le biais de l'unité de communication (301) du serveur d'information de machine à laver (300) et de l'unité de communication (22) de la machine à laver (1) ; et
la section de commande de pré-programmation de fonctionnement (23e) de la machine à laver (1) est conçue pour effectuer la tâche de pré-programmation de fonctionnement en fonction des informations d'heure de la différence par rapport à l'heure actuelle dans l'ordre de pré-programmation de fonctionnement.

2. Système de machine à laver selon la revendication 1, comprenant en outre un terminal de données (10) capable de communiquer par le biais du réseau de communication (200),
dans lequel le terminal de données (10) comprend :
une unité annonciatrice (103) conçue pour afficher l'écran de paramétrage de pré-programmation de fonctionnement généré par la section de génération d'informations d'écran (303a) du serveur d'information de machine à laver (300) ;
une unité de fonctionnement (104) conçue pour effectuer un paramétrage de pré-programmation de fonctionnement en fonction de l'écran de paramétrage de pré-programmation de fonctionnement affiché sur l'unité annonciatrice (103) ;
une première unité de communication (101) conçue pour communiquer avec la machine à laver (1) par le biais de l'unité de communication (22) de la machine à laver (1) ; et
une deuxième unité de communication (102) conçue pour communiquer avec le serveur d'information de machine à laver (300) par le biais de l'unité de communication (301) du serveur d'information de machine à laver (300),
le terminal de données (10) étant conçu pour amener :
la deuxième unité de communication (102) à recevoir les informations d'écran de paramétrage de pré-programmation de fonctionnement depuis le serveur d'information de machine à laver (300), et transmettre des informations d'heure de pré-programmation de fonctionnement choisie par l'unité de fonctionnement (104) au serveur d'information de machine à laver (300) ; et
la première unité de communication (100) à transmettre l'ordre de pré-programmation de fonctionnement à la machine à laver (1) après que la deuxième unité de communication (102) a reçu l'ordre de pré-programmation de fonctionnement en provenance du serveur d'information de machine à laver (300).

3. Système de machine à laver selon la revendication 1 ou la revendication 2, dans lequel:
le serveur d'information de machine à laver (300) comprend en outre une section de stockage d'informations d'utilisateur (302a) destinée à stocker des informations d'heure d'une opération pré-programmée qui a été paramétrée la dernière fois pour chaque utilisateur individuel, et
le serveur d'information de machine à laver (300) est conçu pour ajouter les informations d'heure d'une opération pré-programmée paramétrée la dernière fois à la section de stockage d'informations d'utilisateur (302a) lors de la génération des informations d'écran de paramétrage de pré-programmation de fonctionnement et pour rendre les informations d'heure réutilisables.
